# EUROPEAN PATENT SPECIFICATION

(11) **EP 1 331 143 B1**
(45) Date of publication and mention of the grant of the patent: **08.08.2012**
(21) Application number: 01980940.9
(22) Date of filing: 31.10.2001
(51) Int. Cl.: B60R 21/264, B60R 21/20

(54) **GAS GENERATOR FOR AIR BAG AND AIR BAG DEVICE**
GASGENERATOR FÜR EINEN AIRBAG UND AIRBAGVORRICHTUNG
GENERATEUR DE GAZ POUR AIRBAG ET DISPOSITIF D'AIRBAG

(30) Priority: 31.10.2000 JP 2000333503; 31.10.2000 JP 2000333504; 31.10.2000 JP 2000333505; 11.07.2001 JP 2001210126; 29.10.2001 JP 2001331399; 29.10.2001 JP 2001331400; 29.10.2001 JP 2001331401
(43) Date of publication of application: 30.07.2003
(73) Proprietor: Daicel Chemical Industries, Ltd., Kita-ku, Osaka-shi Osaka 530-0001 (JP)
(72) Inventor: IWAI, Yasunori, Shijonawate-shi, Osaka 575-0051 (JP); MIYAJI, Katsuhito, Himeji-shi, Hyogo 671-1254 (JP); OHJI, Nobuyuki, Takasago-shi, Hyogo 676-0805 (JP); YABUTA, Mikio, Himeji-shi, Hyogo 671-1224 (JP); HATOMOTO, Atsushi, Himeji-shi, Hyogo 671-1262 (JP); IWAKIRI, Toshiro, Himeji-shi, Hyogo 671-1262 (JP); KATSUDA, Nobuyuki, Himeji-shi, Hyogo 671-1146 (JP); NAKASHIMA, Yoshihiro, Himeji-shi, Hyogo 671-1153 (JP); OKUYAMA, Takashi, Himeji-shi, Hyogo 671-1262 (JP)
(74) Representative: Grünecker, Kinkeldey, Stockmair & Schwanhäusser
(86) International application number: PCT/JP2001/009562
(87) International publication number: WO 2002/036395

(56) References cited:
- WO-A1-00/18618
- JP-A- 6 099 786
- JP-A- 8 164 816
- JP-A- 9 207 705
- JP-A- 11 059 318
- JP-A- 11 348 711
- JP-U- 3 009 568
- JP-U- 3 019 432
- JP-U- 3 029 968
- JP-U- 3 038 714

## Description

### Technical Field where the Invention Belongs

The present invention relates to a gas generator for an air bag disposed in a vehicle and preferably used for the air bag to protect a passenger from an impact, and to an air bag apparatus using the gas generator. A gas generator according to the preamble of claim 1 is known from EP 1 024 062 A1.

### Prior Art

An air bag apparatus is mounted in an automobile and the like to protect a passenger from an impact at the time of collision. The air bag apparatus is formed such as to rapidly generate gas by actuation of a gas generator for an air bag, thereby expanding the air bag (bag body).

Generally in a gas generator, when an ignition means is actuated by the impact, a gas generating agent is ignited and burnt to generate a high temperature and high pressure gas, and the generated gas ejected from a gas discharging port into the air bag (bag body).

Conventionally, the ignition means only comprises an igniter which is actuated by the actuating signal, or comprises a combination of the igniter and an transfer charge to be ignited and burnt by the actuated igniter.

A combustion chamber in which the gas generating agent is accommodated is variously designed depending upon a shape of a housing, a layout of necessary constituent members and the like, and as to the gas generating agents charged therein, there are various shapes and compositions.

Combustion degree of the gas generating agent is an important design factor for adjusting the operation performance of the gas generator. Therefore, it is preferable that the gas generating agent charged in the combustion chamber is effectively and reliably ignited and burnt by the actuation of the ignition means.

However, the conventional gas generator is still susceptible to improvement for enhancing the ignition performance of the gas generating agent.

An amount of the gas generating agent used in the gas generator is also an important factor for adjusting the operation performance of the gas generator. Usually, the gas generating agent is charged in the combustion chamber provided in the housing, so that it is necessary to adjust the capacity of the combustion chamber in order to adjust the amount of gas generating agent.

Further, conventionally, there is a gas generator in which two combustion chambers are provided in the housing, and the gas generating agent is charged in each of the combustion chambers. In order to obtain an optimal operation performance, the gas generator is formed such that igniting timing of the gas generating agent in each of the combustion chambers can be adjusted. In such a gas generator, it is preferable that the combustion of the gas generating agents accommodated in each combustion chamber can independently be adjusted, and it is necessary that the gas generator can easily be produced and a size thereof Is reduced.

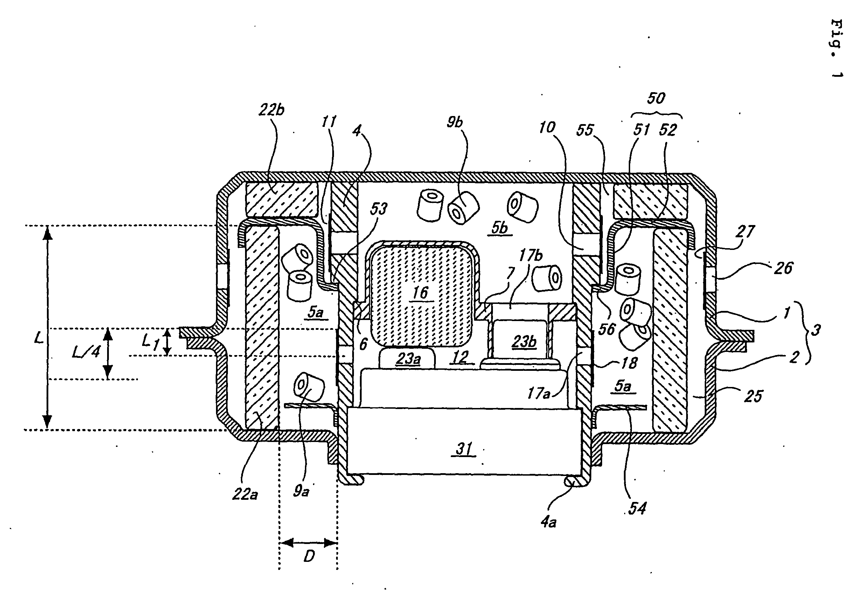

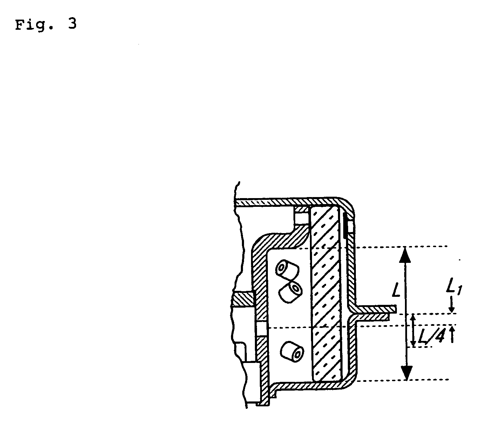

JP 3029968 U discloses a gas generator for an airbag comprising a housing formed of a diffuser shell having a plurality of gas discharge ports and a closure shell, wherein an inner cylindrical wall is formed integrally with the diffuser shell to be aligned with a center axis of the housing and a retainer abuts the inner cylindrical wall. In the embodiment depicted in Fig. 1, a radial inner portion of the retainer abuts a burr of the inner cylindrical wall, which is formed by butt-welding the inner cylindrical wall to the closure shell. In the embodiment depicted in Fig. 3, the retainer abuts a step-notch formed on an outer peripheral surface of the inner cylindrical member wall.

US 5,149,129 A relates to a gas generator for an airbag comprising a combustion chamber which is surrounded by an annular filter chamber, wherein an annular filter of the filter chamber has an exposed annular surface extending on its outside of its entire circumference for discharging the propellant gases into an airbag.

JP 08 164 816 A discloses a gas generator, wherein an ignition member Is disposed at a hollow cylinder member and a combustion chamber is disposed at the peripheral part. The combustion chamber is formed of independent chambers partitioned by container members disposed concentrically with the hollow cylinder member and having plural second gas holes, and also partitioned by a partition member. A fuse for flames generated from the ignition member is formed in the hollow cylinder member, and the fuse and each combustion chamber are communicated with each other through first gas holes. A flow limiting means is provided to prevent the combustion gas of the respective combustion chambers from flowing through to each other through the first gas holes corresponding to the respective combustion chambers.

### Disclosure of the Invention

The present invention provides a gas generator in which ignition and combustion performance of the gas generating agent is enhanced by improving an inside structure of the gas generator, thereby enhancing the operation performance.

In a gas generator for an air bag not in accordance with the present invention by adjusting a shape of the combustion chamber in which the gas generating agent is accommodated and an ejecting position of a flame caused by actuation of the ignition means toward the combustion chamber, the ignition and combustion performance of the gas generating agent is enhanced and sufficient actuation output is obtained.

In other words, the present invention provides a gas generator for an air bag according to claim 1.

The inner cylindrical member is provided with a flame-transferring port for ejecting flames generated by actuation of the ignition means into the first combustion chamber. Also, controlling a position where the flame-transferring port is formed in a relation to the axial length of the first combustion chamber, the object of the invention can be achieved. More specifically, a gas generator for an air bag in which the flame-transferring port is formed in the area (L₁/L ≤ 1/4) such that a distance L₁ from the center of the axial average length measured from the housing inner bottom surface in the first combustion chamber is not more than 1/4 of the axial average length L in the first combustion chamber. When the housing comprises a diffuser shell in a cylindrical shape with a top having the gas discharging port and a closure shell in a cylindrical shape with a bottom forming the inner space together with the diffuser shell, the inner bottom surface of the housing corresponds to the inner bottom surface of the closure shell.

It is preferable that the flame-transferring port is positioned in the area such that a distance L₁ from the center of the axial average length measured from the housing inner bottom surface in the first combustion chamber is not more than 1/4 of the axial average length L in the first combustion chamber.

According to the gas generator not in accordance with the present invention, by adjusting the D/L to be in the range of 0.2 to 2.0 and further arranging L₁/L ≤ 1/4, flames of the ignition means to ignite the gas generating agent in the first gas generating chamber (first gas generating agent, hereinafter) is ejected toward the center of the axial direction in the first combustion chamber, so that the ignition and combustion performance of the first gas generating agent is enhanced. That is, by forming in the above manner, the flame of the ignition means ejected into the first combustion chamber spreads widely in the combustion chamber to ignite more amount of gas generating agents than other wise, so that the ignition and combustion performance of the first gas generating agent can be enhanced.

A gas generator in which the inner cylindrical member is disposed in the housing, the ignition means is arranged inside the inner cylindrical member, the annular first combustion chamber is provided radially in the outside thereof and the flame of the ignition means disposed inside the inner cylindrical member passes through the flame-transferring port provided in the inner cylindrical member to be ejected into the first combustion chamber. A gas generator in which the combustion chamber accommodating the gas generating agent exists radially in the outside of the inner cylindrical member. In this case, the ignition means can be accommodated inside the inner cylindrical member.

The axial length of the first combustion chamber can be limited by an inner surface of the housing existing in the axial direction of the first combustion chamber. When the first combustion chamber is adjusted, a retainer having a partition wall surface is disposed on an axial end of the first combustion chamber, and an axial end of the first combustion chamber can be defined by the partition wall surface. In other words, retainers can be disposed axially on the opposite sides of the first combustion chamber to limit the axial length of the combustion chamber, or a retainer can be disposed axially on one side of the combustion chamber to limit axial length of the combustion chamber with the housing and the retainer. In this case, the axial average length (L) of the first combustion chamber can be defined as an average distance between the retainers, or an average distance between an inner surface of the housing and the retainer. The retainer is demanded to define at least the axial length of the first combustion chamber and is provided with at least a partition wall surface in a shape to axially close the first combustion chamber. The retainer also forms a flow-path for allowing a working gas to pass the opposite side of the first combustion chamber, or can divide the coolant means, if required. For example, the first combustion chamber and the flow-path of the working gas can be partitioned by the partition wall surface.

Further, when the inner cylindrical member is disposed in the housing, an end of the inner cylindrical member is formed in a shape to close the first combustion chamber such as an outwardly directed flange-like shape and with this, the axial length of the first combustion chamber can be limited.

The radial distance of the first combustion chamber can be defined by the outer peripheral surface of the inner cylindrical member and a member arranged radially in the outside the first combustion chamber. In this case, the radial average distance (D) can be defined as an average distance between the outer peripheral surface of the inner cylindrical member and the member arranged radially in the outside of the first combustion chamber. As the member arranged radially in the outside of the first combustion chamber, for example, a coolant means or filter means for cooling and/or purifying the working gas generated by combustion of the gas generating agent can be used.

In the gas generator, the ignition performance of the first gas generating agent can be enhanced by a structure of the gas generator. Thus, even if the ignition performance of the first gas generating agent is slightly inferior, the first gas generating agent can be satisfyingly burnt. In other words, by controlling the shape of the first combustion chamber or an arrangement of a flame-transferring port, even the gas generating agent without a satisfying ignition performance can be used as the first gas generating agent. Improvement on the ignition performance of the gas generating agent can be measured, for example, by the time when the maximum pressure inside the gas generator at activation can obtained, or a tank curve (pressure time curve in 60-liter tank) obtained by the 60-liter tank test (tank combustion test).

The gas generator can constitute an air bag apparatus together with an impact sensor to detect the impact and actuate the gas generator, an air bag for introducing a gas generated in the gas generator to inflate and a module case for accommodating the air bag.

The gas generator is accommodated in the module case together with the air bag (bag body) for introducing a generated gas to inflate and is provided as a pad module.

In the air bag apparatus, the gas generator is actuated upon the impact sensor detecting the impact and a working gas is discharged from the gas discharging port of the housing. The working gas flows into the air bag and thereby, the air bag ruptures the module cover and inflates to form a cushion between a passenger and a hard structure in a vehicle to absorb the impact.

In the gas generator for an air bag not in accordance with the present invention, by adjusting a shape of the first combustion chamber provided radially in the outside of the inner cylindrical member or adjusting an ejecting position of flames from the ignition means to ignite the first gas generating agent, the ignition of the first gas generating agent in the initial stage of actuation of the gas generator is enhanced. That is, flames of the ignition means ejecting into the first combustion chamber is made to spread widely inside the combustion chamber to ignite more amount of gas generating agents than otherwise.

Therefore, according to the gas generator for the air bag of the invention, by improving an internal structure thereof, the ignition and combustion performance of the gas generating agent is enhanced, and further, the operation performance of the gas generator is enhanced.

The present invention provides a gas generator for an air bag capable of downsizing the gas generator and capable of easily and reliably adjusting a capacity of the combustion chamber accommodating the gas generating agent, and provides a retainer for the gas generator as well as an air bag apparatus using the gas generator.

A retainer of a gas generator for an air bag according to the present invention is used in a gas generator for an air bag in which, in a cylindrical housing having a gas discharging port, an inner cylindrical member having a cylindrical peripheral wall provided with a through-hole is disposed and at least either of an ignition means and gas generator is disposed in the inner cylindrical member, wherein the retainer comprises a cylindrical portion, which is positioned with a distance from an outer peripheral surface of the cylindrical peripheral wall and faces the outer peripheral surface, and a flange-shaped partition wall integrally formed with the cylindrical portion, at least either of the cylindrical portion and the partition wall changes gas-flow ejected from the through-hole formed in the cylindrical peripheral wall and collects combustion products other than gaseous material included in the gas. The combustion products included in the gas are any combustion products, other than gaseous material, such as fluid, semifluid and solid included in the gas ejected from the through-hole.

A flowing direction of the gas ejected from the through-hole provided in the cylindrical peripheral wall is changed by the cylindrical portion of the retainer. At that time, combustion products, other than gaseous material, such as fluid, semifluid and solid included in the gas collide against the cylindrical portion and/or partition wall. Thereby, the combustion products adhere to the cylindrical portion and/or partition wall or drop to be removed from the gas. The combustion products are collected by the cylindrical portion and/or partition wall of the retainer and thus, it is unnecessary to dispose the coolant means or filter means for removing or reducing the combustion products in the gas ejected from the through-hole and as a result, the producing cost and capacity of the gas generator can be reduced.

As described above, the retainer of the present invention collects the combustion products in the gas ejected from the through-hole with the cylindrical portion and/or partition wall thereof. When combustion products in the gas ejected from the through-hole is collected by the cylindrical portion, the cylindrical portion is formed in such a size and shape that the combustion product can be collected, and intersection angle with the gas ejected from the through-hole is adjusted. And in this retainer, in order to collect the combustion products more satisfyingly, it is preferable that the cylindrical portion is formed into a size and shape capable of covering at least a communication hole of the inner cylindrical member.

The retainer of the gas generator for the air bag according to the present invention comprises the cylindrical portion and the flange-shaped partition wall integrally formed with the cylindrical portion, and the partition wall is formed into a shape and size capable of defining at least the axial end of the first combustion chamber. Therefore, in this case, the partition wall of the retainer has to be formed into a shape and size capable of closing at least an axial end of the first combustion chamber. It is possible to arbitrarily select whether the retainer is formed into a shape and size capable of dividing the coolant means disposed radially in the outside of the combustion chamber and whether the retainer is formed into a shape and size capable of dividing the entire outer space of the inner cylindrical member in the housing into upper and lower portions, depending upon balance of the entire structure in the gas generator. The coolant means is made of laminating wire mesh or expanded metal or the like, and has function to purify or cool a working gas generated by combustion of the gas generating agent.

Preferably, part of the cylindrical portion is formed into a shape and size capable of fitting outwardly the inner cylindrical member. The cylindrical portion is used in a gas generator in which the annular coolant means is accommodated in the housing, the cylindrical portion is formed into such a shape and size that part of the cylindrical portion is fitted to an outer peripheral surface of the coolant means.

This retainer can include at least the cylindrical portion, and also include the partition wall. The cylindrical portion is formed into a substantially cylindrical shape, and the partition wall is formed annually and arranged at an axial end of the cylindrical portion in a outwardly or inwardly directed flange-like shape. Further in this retainer, an engaging portion which engages the inner cylindrical member in the housing can be formed into an inwardly directed flange-like shape on the other end of the cylindrical portion. And, if the retainer is fitted outwardly to the inner cylindrical member having the communication hole, preferably, the cylindrical portion faces the communication hole of the inner cylindrical member, and the cylindrical portion has a size to cover the communication hole. In other words, the cylindrical portion is positioned with a distance from the inner cylindrical member at least in the vicinity of the through-hole, and faces the through-hole without closing the same.

The present invention provides a gas generator for an air bag by using the above retainer. Namely, the present invention provides a gas generator for an air bag comprising, in a cylindrical housing having a gas discharging port, an inner cylindrical member having a cylindrical peripheral wall provided with a through-hole, at least either of an ignition means and a gas generating agent disposed inside the inner cylindrical member, and in the outside of the inner cylindrical member, a retainer having a cylindrical portion surrounding a portion of the inner cylindrical member and a flange-shaped partition wall integrally formed on the cylindrical portion, wherein a cylindrical portion of the retainer faces an outer peripheral surface of the cylindrical peripheral wall with a distance, at least either of the cylindrical portion and the partition wall changes a flow of a gas ejected from a through-hole formed in the cylindrical peripheral wall of the inner cylindrical member, and collects combustion products included in the gas.

And in the gas generator for the air bag in which the first combustion chamber for accommodating the gas generating agent is provided radially in the outside of the inner cylindrical member, the partition wall of the retainer is formed into a shape and size capable of defining at least the axial end of the first combustion chamber, and the cylindrical portion is preferably formed into a shape and size capable of fitting outwardly the inner cylindrical member.

In this gas generator, when a step-notched portion is formed by stepwisely notching the outer peripheral surface of the inner cylindrical member in the closure shell side, and an inwardly directed flange-shaped engaging portion is formed on the end of the cylindrical portion of the retainer, the engaging portion is engaged to the notch so that the inner cylindrical member and the retainer can be combined. In this case, the retainer receives pressure of a working gas generated in the first combustion chamber at activation of the gas generator, and thereby the retainer is unfailingly supported and fixed by the inner cylindrical member. Thus, it is possible to easily and reliably control the axial length of the first combustion chamber by this retainer.

A gas generator in which the inner cylindrical member is disposed in the housing, the ignition means is disposed inside the inner cylindrical member, the first combustion chamber is provided radially in the outside thereof, and flames of the ignition means disposed inside the inner cylindrical member passes through the through-hole provided in the cylindrical peripheral wall of the inner cylindrical member to be ejected into the first combustion chamber. A gas generator in which the combustion chamber accommodating the gas generating agent is provided radially in the outside of the inner cylindrical member. In this case, the ignition means can be accommodated inside the inner cylindrical member.

In a general aspect of the gas generator according to the present invention, the ignition means is disposed inside the inner cylindrical member, and the first combustion chamber in which the gas generating agent is charged is provided radially in the outside of the inner cylindrical member. The through-hole (hereinafter, this through-hole is referred to as "flame-transferring port") for ejecting flames generated by actuation of the ignition means into the first combustion chamber is formed in the cylindrical peripheral wall of the inner cylindrical member. The gas generating agent ("first gas generating agent" hereinafter) in the first combustion chamber is ignited and burnt by flames ejected from the flame-transferring port.

According to the gas generator of the present invention using the retainer having the partition wall, the axial length of the combustion chamber can be controlled by the retainer, so that, by appropriately adjusting the shape and location of the retainer, it is possible to shorten the axial length of the first combustion chamber. As a result, flames ejected from the flame-transferring port can be spread over the entire first combustion chamber, and the first gas generating agent accommodated in the first combustion chamber can effectively be ignited. When the retainer is disposed on the axial end of the first combustion chamber, the flow-path through which a working gas passes can be formed on the other side of the retainer to the first combustion chamber.

If the retainer is disposed as described above and the axial length of the first combustion chamber is adjusted to enhance the ignition performance of the first gas generating agent, even with the first gas generating agent used in the gas generator not having a satisfying ignition performance, the ignition performance of the gas generating agent can be compensated. In other words, by controlling the shape of the first combustion chamber or an arrangement of a flame-transferring port, even the gas generating agent without a satisfying ignition performance can be used as the first gas generating agent. Improvement on the ignition performance of the gas generating agent can be measured, for example, by the time when the maximum pressure inside the gas generator at activation can be obtained, or a tank curve (pressure time curve in 60-liter tank) obtained by the 60-liter tank test (tank combustion test).

The gas generator can constitute an air bag apparatus together with an impact sensor to detect the impact and actuate the gas generator, an air bag to introduce a gas generated in the gas generator and inflate and a module case for accommodating the air bag.

The gas generator is accommodated in the module case together with the air bag (bag body) for introducing a generated gas to inflate and is provided as a pad module.

In the air bag apparatus, the gas generator is actuated upon the impact sensor detecting the impact and a working gas is discharged from the gas discharging port of the housing. The working gas flows into the air bag and thereby, the air bag ruptures the module cover and inflates to form a cushion between a passenger and a hard structure in a vehicle to absorb the impact.

In the gas generator of the present invention, if the second gas generating agent generates solid combustion products such as fluid or semifluid, by arranging the retainer of the present invention to face the communication hole of the inner cylindrical member, the solid combustion products can be collected by the retainer. And by collecting the solid combustion products by the retainer in this manner, the an heat amount of a working gas generated by combustion of the second gas generating agent is reduced and as a result, it is possible to reduce an amount of coolant means and cooling ability thereof used for cooling the working gas.

When the retainer is fixed by being hooked on a step portion of an inner cylindrical member and by being interposed between the first and second coolant means, working gases generated in the respective combustion chambers are not leaked to each other chambers. In this case, since the retainer can be disposed without being press-inserted, the assembling can be facilitated. Further, the retainer is pushed towards the step-notched portion of the inner cylindrical member by the combustion pressure of the first gas generating agent, so that they can be more tightly attached to each other.

When the coolant means is divided by the retainer of the present invention and working gases generated in the respective combustion chambers pass through different coolant means, the coolant means is independent from each other, and thereby the operation output of the gas generator can be adjusted easily.

Further, the present invention provides a gas generator for an air bag in which two combustion chambers are provided in the housing and combustion degrees of the gas generating agents in the respective combustion chambers can independently be adjusted, and that can be produced easily and smaller.

A gas generator for an air bag comprising, in a housing having a gas discharging port, an inner cylindrical member having a cylindrical peripheral wall, two combustion chambers divided by the inner cylindrical member, gas generating agents stored in the respective chambers to be burnt for generating a working gas, wherein working gases generated in the respective combustion chambers pass through different flow-paths and then, reach the gas discharging port.

The inner cylindrical member includes a cylindrical peripheral wall, and the wall defines the combustion chamber. Generally, the ignition means provided to ignite the gas generating agent is preferably accommodated inside the inner cylindrical member. Only single inner cylindrical member is disposed in the housing, and preferably, the combustion chambers are defined inside and outside the inner cylindrical member. It is preferable that all ignition means included in the gas generator is accommodated inside the inner cylindrical member. In this case, the inner cylindrical member defining the combustion chambers and the inner cylindrical member accommodating the ignition means are the same (that is, a single cylindrical member).

The flow-path of a working gas is a course (or flowing manner) of a working gas inside the housing. That the flow-paths of working gases generated in the respective combustion chambers are different from each other indicates that the course of the working gas generated in one combustion chamber is different at least in any part from a course of a working gas generated in another combustion chamber. Therefore, if a working gas generated in one combustion chamber directly passes through the coolant means provided radially in the outside of the chamber, the respective flow-paths of the working gases are different from each other as long as a working gas generated in another combustion chamber does not follow the course from said one combustion chamber to the coolant means.

As described above, by making separate flow-paths of working gases for the respective combustion chambers, it is possible to easily adjust the generation of working gases in the respective combustion chambers.

By dividing the two combustion chamber with the inner cylindrical member having the cylindrical peripheral wall and accommodating the ignition means inside the inner cylindrical member, the gas generator can be reduced in size.

That is, the gas generator for the air bag can be reduced in size, and combustion degree of the gas generating agent in the combustion chamber can be independently adjusted at each chamber.

A gas generator for an air bag in which a working gas generated in one of the two combustion chambers provided in the housing reaches a gas discharging port without flowing into the other combustion chamber. With this structure, the working gas generated in one of the combustion chambers does not concern the combustion of a gas generating agent in the other combustion chamber, and the combustion of the gas generating agent in each combustion chamber can be independently adjusted.

If the housing is defined such that a working gas generated in one of the combustion chambers passes through the flow-space defined by the other combustion chamber, a working gas generated in one of the combustion chambers does not flow into the other combustion chamber. This flow-space can be, for example, divided by the retainer defining the end of the other combustion chamber.

In the gas generator mentioned above, working gases generated in the respective combustion chambers can be made to reach the gas discharging port through different coolant means. Also, the working gases can be made to reach different gas discharging ports.

When different gas discharging ports or coolant means are formed for working gases generated in the respective combustion chambers, naturally, these gas discharging ports or coolant means have to be provided to correspond to the respective combustion chambers. In other words, exclusively for a working gas generated in one combustion chamber, a gas discharging port and/or a closure shell are provided.

When different gas discharging ports or coolant means are formed for working gases generated in the respective combustion chambers, a flow-space of a working gas is formed in the housing so that a working gas generated in one of the combustion chambers passes through the flow-space. Also in this case, two flow-spaces may be formed in the housing so that working gases generated in the respective combustion chambers pass through different flow-spaces.

For example, the flow-space communicating one of the combustion chambers can be obtained such that, after a retainer is provided in the other combustion chamber to define an end portion of the other combustion chamber, a space is defined on the other side of the retainer to said other combustion chamber. In this case, at least a partition wall for defining an end of said other combustion chamber has to be provided with the retainer, and additionally, a structure to be supported and fixed inside the housing also has to be provided with the retainer. An example of such a retainer can be obtained by forming a cylindrical portion in a substantially cylindrical shape and an outwardly or inwardly directed flange-shaped partition wall integrally. The retainer obtained in this manner can be supported and fixed inside the housing by fitting the cylindrical portion outwardly or inwardly a member arranged on an inner wall portion of the housing or inside the housing.

In addition to defining with a retainer, the flow-space can be obtained by a member (e.g., the inner cylindrical member) having a cylindrical peripheral wall for defining the combustion chambers or by changing a structure of the housing.

In the gas generator formed in the above-described manner, working gases generated in the two combustion chambers reach the coolant means or gas discharging port through different flow-paths. That is, the one combustion chamber and the other combustion chamber communicate each other spatially through the coolant means, but a working gas generated in one of the combustion chambers never affect the combustion of the gas generating agent accommodated in the other combustion chamber. Therefore, even if both the combustion chambers communicate each other through a little gap, the generation of the working gases in each combustion chamber can be independently adjusted as long as a working gas generated in one of the combustion chambers does not affect the combustion of gas generating agent accommodated in the other combustion chamber.

Accordingly, in the gas generator, when the gas generating agent in one of the combustion chambers is burnt, the gas generating agent in the other combustion chamber burns without receiving any influence of combustion pressure or combustion heat generated in said one combustion chamber. As a result, it is possible to adjust the combustion of the gas generating agent accommodated in each combustion chamber independently, i.e., it is possible to easily and reliably adjust the operation performance of the gas generator.

Further, by forming different paths from the respective combustion chambers to the coolant means, flames can be hardly transferred between the combustion chambers. As a result, when a seal tape seals off the combustion chamber from the flow-space, a seal tape in which a rupturing strength is not so high or melting point is low, e.g., aluminum seal tape having metal layer of 80µm can be used.

The gas generator for the air bag of the invention can be realized by the following gas generator, for example. That is, in a cylindrical housing comprising a diffuser shell which is formed in a cylindrical shape with a top and has a gas discharging port, and a closure shell forming the inner space together with a diffuser shell, an inner cylindrical member defining an inner space inside the housing is disposed and a first combustion chamber is provided radially in the outside thereof. The inside of the inner cylindrical member is divided by a partition wall such that the divided portions are adjacent to each other axially, and one of the divided portions in the diffuser shell side is defined as the second combustion chamber and the other in the closure shell side is defined as the ignition means accommodating chamber. A gas generating agent is charged into each combustion chamber, and an ignition means to initiate activation of the gas generator is arranged in the ignition means accommodating chamber. Annular coolant means made of laminated wire mesh to cool or purify a working gas generated in each combustion chamber is disposed radially in the outside of the first combustion chamber.

And in this gas generator, for example, after the retainer is disposed on an axial end of the first combustion chamber to close the axial end of the first combustion chamber, the flow-space of a working gas can be formed between the retainer and an inner surface of the diffuse shell. In this case, the peripheral wall of the inner cylindrical member is provided with a communication hole, and the second combustion chamber and the flow-space communicate each other through the communication hole.

Since two combustion chambers are provided in the gas generator of the present invention, it is preferable that the gas generating agents in the respective combustion chambers can be burnt at different timing. Therefore, in the gas generator for the air bag of the invention, the ignition means in which the activation timings can be arbitrarily differed, for example, using two igniters is optimally used.

The gas generator can constitute an air bag apparatus together with an impact sensor to detect the impact and actuate the gas generator, an air bag to introduce a gas generated in the gas generator and inflate and a module case for accommodating the air bag.

The gas generator is accommodated in the module case together with the air bag (bag body) for introducing a generated gas to inflate and is provided as a pad module.

In the air bag apparatus, the gas generator is actuated upon the impact sensor detecting the impact and a working gas is discharged from the gas discharging port of the housing. The working gas flows into the air bag and thereby, the air bag ruptures the module cover and inflates to form a cushion between a passenger and a hard structure in a vehicle to absorb the impact.

In the gas generator for an air bag according to the present invention, though the overall size of the gas generator is limited, working gases generated in the respective combustion chambers can flow towards the coolant means via different flow-pathes so that the combustion of the gas generating agent in each combustion chamber is independently adjusted, and thereby the operation output of the gas generator can be easily adjusted. As a result, it is possible to reduce a weight of the coolant means. This becomes remarkable when different coolant means or different gas discharging ports are formed for the respective combustion chambers.

Especially in the gas generator obtaining the flow-space by the retainer it is possible to enhance the ignition of the first gas generating agent in the initial stage of actuation of the gas generator by adjusting a shape of the first combustion chamber provided radially in the outside of the inner cylindrical member or by adjusting an ejecting location of flames from the ignition means which ignites the first gas generating agent. In other words, by allowing flames of the ignition means ejected into the first combustion chamber to spread widely in the combustion chamber, more amount of gas generating agents can be ignited than otherwise.

Some of the above gas generators and retainers can be structured by incorporating each other's elements.

### Brief Description of the Drawings

Fig. 1 is a vertical sectional view showing a gas generator for an air bag of one embodiment.
Figs. 2 are partial vertical sectional views showing the gas generator for the air bag of other embodiment, wherein Figs. 2(c), (e), (f) and (g) show examples not falling within the scope of the present invention.
Fig. 3 is a partial vertical sectional view showing the gas generator for the air bag of an example not falling within the scope of the present invention.
Figs. 4 are partial vertical sectional views showing the gas generator for the air bag of an example not falling within the scope of the present invention.
Fig. 5 is a vertical sectional view showing the gas generator for the air bag of an example not falling within the scope of the present invention.
Fig. 6 is a vertical sectional view showing the gas generator for the air bag of an example not falling within the scope of the present invention.
Figs. 7 are vertical sectional views of an essential portion showing other aspects of a retainer, wherein Figs. 7 (c), (f), (g) and (h) show examples not falling within the scope of the present invention.
Figs. 8 are vertical sectional views showing the gas generator for the air bag of other embodiment, wherein Fig. 8 (d) shows an example not falling within the scope of the present invention.
Figs. 9 are vertical sectional views showing the gas generator for the air bag of an example not falling within the scope of the present invention.
Figs. 10 is vertical sectional views showing the gas generator for the air bag of an example not falling within the scope of the present invention.
Fig 11 is vertical sectional views showing the gas generator for the air bag of other embodiment.

The numerals in the drawings will be explained.
- 3: housing
- 4: inner cylindrical member
- 5a and 5b: combustion chamber
- 7: partition wall
- 9a and 9b: gas generating agent
- 12: ignition means accommodating chamber
- 16: transfer charge
- 17a, 17: flame-transferring port
- 22a and 22b: coolant means
- 23a and 23b: igniter
- 25: gap
- 26: gas discharging port
- 50: retainer
- 51: inner wall portion or cylindrical portion
- 52: partition wall surface
- 54: underplate
- 55: flow-path or flow-space

### Preferred Embodiments of the Invention

A gas generator for an air bag of the present invention will be explained based on the drawings showing preferred embodiments.

Fig. 1 is a vertical sectional view showing one embodiment of the gas generator for the air bag of the present invention.

The gas generator shown in this embodiment has two combustion chambers in a housing and two ignition means respectively corresponding to the combustion chambers. More specifically, in the housing 3 formed by joining a diffuser shell 1 having the gas discharging port 26 and a closure shell 2 forming an inner accommodating space together with the diffuser shell 1, an inner cylindrical member 4 in a substantially cylindrical shape is disposed and the outside thereof is a first combustion chamber 5a. An interior of the inner cylindrical member 4 is divided into two chambers by a partition wall 7, one chamber closer to the diffuser shell is a second combustion chamber 5b and the other chamber closer to the closure shell is an ignition means accommodating chamber 12.

Gas generating agents 9a and 9b are charged into the respective two combustion chambers 5a and 5b defined in the housing 3. The first gas generating agent 9a is charged into the first combustion chamber 5a, and the second gas generating agent 9b is charged into the second combustion chamber 5b. Each of the gas generating agents is ignited and burnt by actuation of the ignition means to generate a working gas for inflating an air bag. Shapes, compositions, composition ratios and amounts of the first and second gas generating agents 9a and 9b in the respective chambers may be different from each other. Especially in this embodiment, the first gas generating agent 9a is a gas generating agent including fuel and oxidizing agent. Guanidine derivatives or a mixture thereof is used as the fuel. Basic copper nitrate is used as the oxidizing agent.

A retainer 50 having an annular partition wall portion 52 is disposed on an axial end of the first combustion chamber 5a in the diffuser shell 1 side. The partition wall portion 52 defines an axial length of the first combustion chamber 5a. In the gas generator shown in Fig. 1, the retainer 50 is formed into an outwardly directed flange-shape, and its inner wall portion 51 is engaged to a step-notched portion 53 of an outer peripheral surface of the inner cylindrical member 4.

In the retainer 50, by adjusting the location thereof or the position of the partition wall portion 52, an inner shape, a capacity and the like of the first combustion chamber 5a can be adjusted. Therefore, it is possible to adjust a ratio (D/L) of a radial average distance (D) of the combustion chamber 5a to an axial average length (L) of the combustion chamber 5a to be in the range of 0.2 to 2.0, preferably of 0.4 to 1.0 by adjusting the shape or position of the retainer 50. In this embodiment, and an end surface of the first combustion chamber 5a in the closure shell 2 side is defined by an inner surface of the closure shell 2, and the gas generating agent 9a in the combustion chamber 5a is supported by an underplate 54.

The retainer 50 shown in this embodiment defines a flow-path 55 on the opposite side the first combustion chamber 5a so that a working gas generated by combustion of the second gas generating agent 9b passes through the flow-path. The flow-path 55 and the second combustion chamber 5b can communicate with each other through a communication hole 10 formed in a partition wall of the inner cylindrical member 4.

An ignition means including two igniters 23a and 23b and a transfer charge 16 charged into an aluminum cup is accommodated in the ignition means accommodating chamber 12. The two igniters 23a and 23b are fixed to a collar assembly 31. The collar assembly 31 is fixed by crimping a lower end 4a of the inner cylindrical member 4. The first igniter 23a and the second igniter 23b are accommodated in spaces defined by the partition wall 7 respectively. The transfer charge 16 is arranged above the first igniter 23a in the space where the first igniter 23a is accommodated.

The space in which the first igniter 23a is accommodated and the first combustion chamber 5a can communicate with each other through a first flame-transferring port 17a formed in a peripheral wall of the inner cylindrical member 4. The first flame-transferring port 17a is formed such that a distance L₁ from the center of the axial average length measured from the inner bottom surface of the closure shell in the first combustion chamber to the center of the first flame-transferring hole 17a is not more than 1/4 of the axial average length L in the first combustion chamber, and preferably, the flame-transferring port 17 is formed at the center of the first combustion chamber 5a in the axial direction. With this design, flames caused by combustion of the transfer charge 16 is ejected to the substantially central position of the first combustion chamber 5a, and the flames of the transfer charge 16 can reach the entire first combustion chamber 5a.

Meanwhile, the space where the second igniter 23b is accommodated and the second combustion chamber 5b can communicate with each other through a second flame-transferring port 17b formed in the partition wall 7. And the second combustion chamber 5b can communicate with a flow-path 55 defined by the retainer 50 through the communication hole 10 formed in the inner cylindrical member 4.

Working gases generated by combustion of the first gas generating agent 9a and the second gas generating agent 9b passes through annular coolant means 22 comprising laminated wire mesh or expanded metal to be discharged from a gas discharging port 26. Especially in this embodiment, the working gases generated from gas generating agents 9a and 9b pass through different coolant means 22a and 22b. More specifically, the first coolant means 22a is disposed radially in the outside of the first combustion chamber 5a, the second coolant means 22b is disposed radially in the outside the second combustion chamber 5b through the flow-path 55, and both the coolant means 22a and 22b are separated from each other by the retainer 50.

Therefore, in the gas generator shown in this embodiment, the transfer charge 16 is burnt by actuation of the first igniter 23a, and its flame passes through the first flame-transferring port 17a and is ejected into the first combustion chamber 5a. Consequently, the first gas generating agent 9a is ignited and burnt to generate a working gas, the working gas passes through the first coolant means 22a and reaches a gap 25 to be discharged from the gas discharging port 26. On the other hand, when the second igniter 23b is actuated, its flame passes through the second flame-transferring port 17b and is ejected into the second combustion chamber 5b to ignite and burn the second gas generating agent 9b. The working gas generated by combustion of the second gas generating agent 9b flows into the flow-path 55 from the communication hole 10, passes through the flow-path 55 and reaches the second coolant means 22b. The working gas is cooled and purified while passing through the second coolant means 22b, and then passes through the gap 25 to be discharged from the gas discharging port 26.

Especially in the embodiment shown in Fig. 1, the retainer 50 is formed into an outwardly directed flange-like shape, and the end of the inner wall portion 51 is engaged to the step-notched portion 53 formed in the outer peripheral surface of the inner cylindrical member 4. Since the communication hole 10 is formed to face the inner wall 51, a working gas which is generated by combustion of the second gas generating agent 9b to be discharged from the communication hole 10 once collides against the inner wall portion 51 of the retainer. Therefore, for example, if the second gas generating agent 9b generates solid combustion products such as fluid or semifluid at the time of combustion, the combustion products collides against the inner wall portion 51 and are removed from the working gas.

Further, in the gas generator shown in this drawing, the two coolant means 22a and 22b are separately disposed, so that the purifying/cooling abilities of the coolant means 22a and 22b can be controlled respectively in accordance with the generation amount of a working gas generated in the combustion chambers 5a and 5b. And, if the second coolant means 22b cools a working gas generated by combustion of the second gas generating agent 9b, an inner diameter of the first coolant means 22a can be made larger, and thereby, the radial average distance (D) of the first combustion chamber 5a can be increased.

In Fig. 1, a numeral 11 represents a seal tape for closing the communication hole 10, a numeral 18 represents a seal tape for closing the first flame-transferring port 17a, and a numeral 27 represents a seal tape for closing the gas discharging port 26. The seal tapes are ruptured when flames or gases pass through the holes or ports.

The retainer 50 shown in this embodiment ensure the axial end of the first combustion chamber 5a, defines the flow-path 55 and separates the coolant means 22a and 22b from each other.

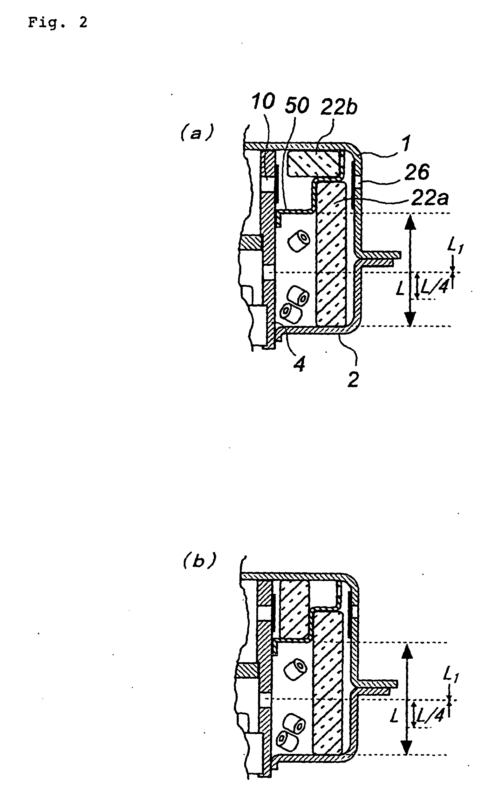

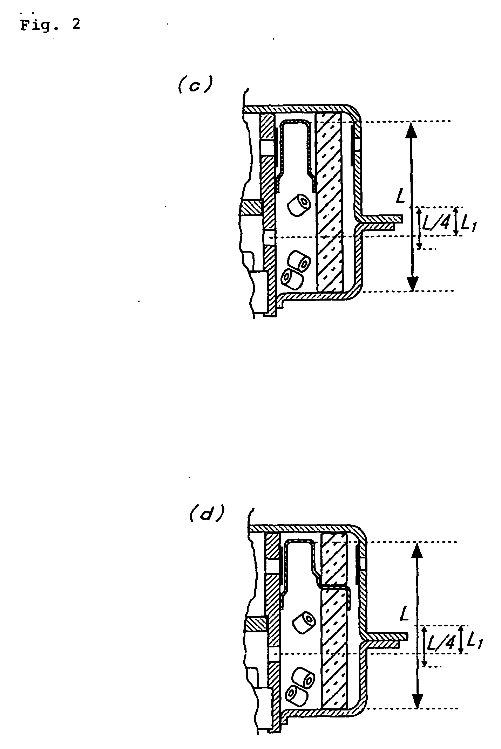

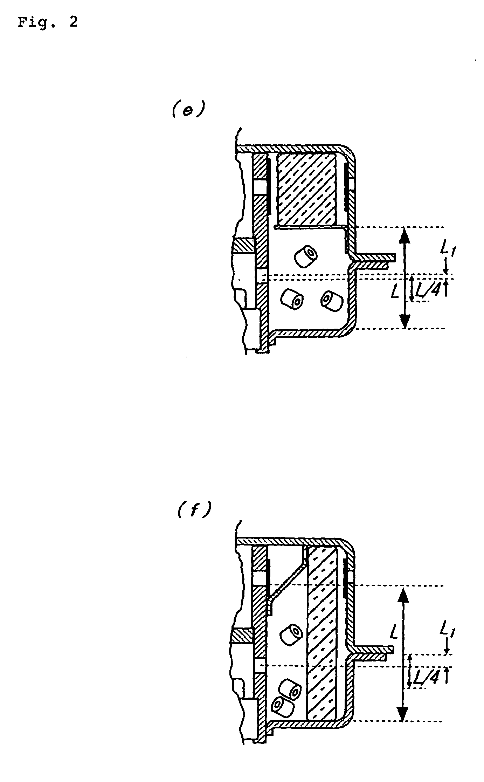

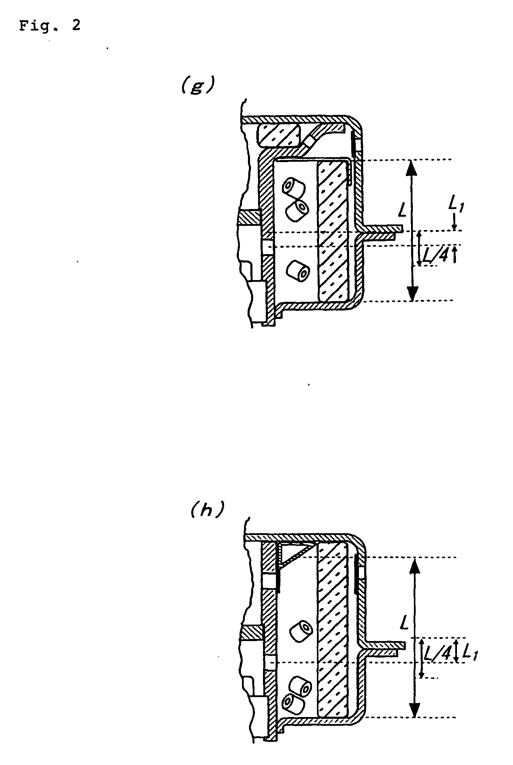

Figs. 2 are sectional views of essential portions of gas generators in which the axial average length (L) of the first combustion chamber is defined by using retainers having different shapes from that shown in Fig. 1. In all of aspects (a to g) shown in Figs. 2, the axial average length (L) of the first combustion chamber 5a is defined by the retainer 50 disposed on the axial end of the first combustion chamber. In the aspects shown in Figs. 2(a) to (g), the flow-path is provided on the opposite side to the first combustion chamber. In an aspect shown in Fig. 2(h), the axial length of the first combustion chamber is defined, and a retainer 50 forming no flow-path is provided on the opposite side to the first combustion chamber. In Pigs. 2 (a) to (h), each of members and portions is designated with the same numeral as that in Fig. 1, and a description thereof is omitted.

Fig. 3 is a sectional view of a portion not in accordance with the present invention showing a gas generator for an air bag in which the axial length of the first combustion chamber is limited with an inner surface of the housing by bending the inner cylindrical member 4 into a flange-like shape. In the gas generator shown in this aspect, a working gas ejected from the through-hole 10 is directly ejected to the coolant means 22. In Pig. 3, each of members and portions is designated with the same numeral as that in Pig. 1, and a description thereof is omitted.

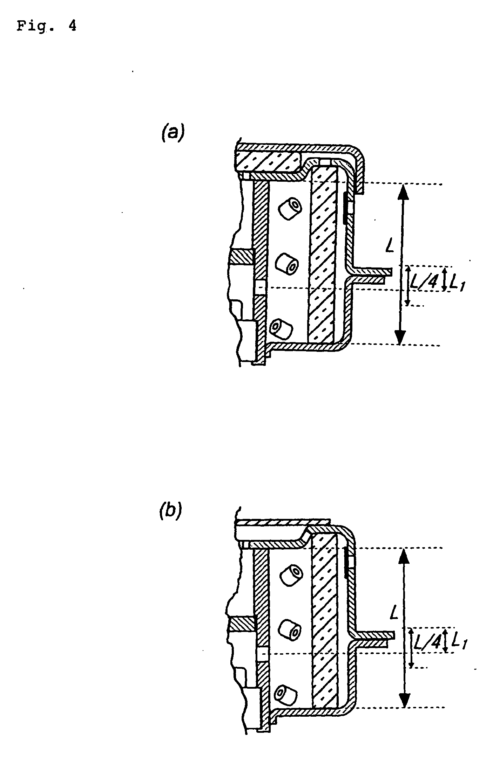

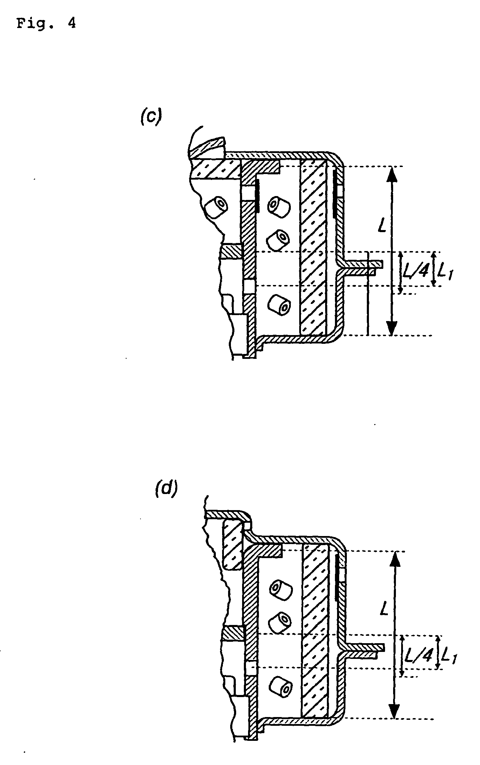

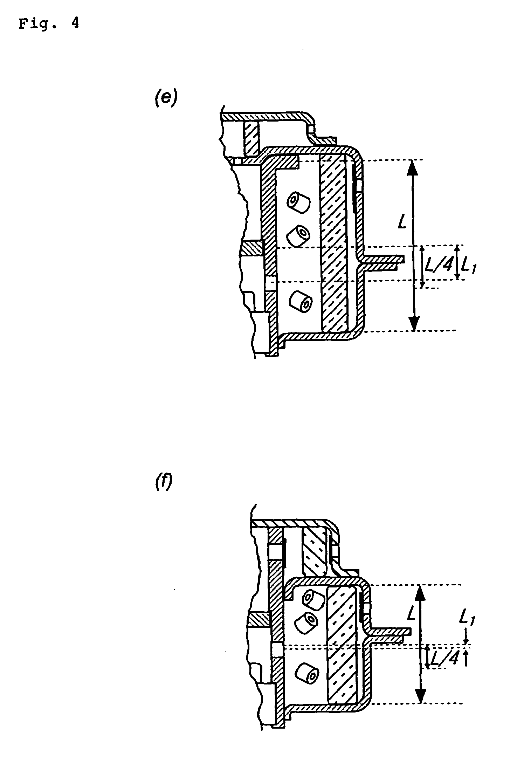

Further, Figs. 4 are sectional views of portions of gas generators not in accordance with the present invention in which the axial average length (L) of the first combustion chamber is limited by an inner surface of the housing. Figs. 4(a) to (f) shows various aspects for limiting the axial average length (L) of the first combustion chamber by an inner surface of the housing. In Figs.4(a) to (f), each of members and portions is designated with the same numeral as that of Fig. 1, and a description thereof is omitted.

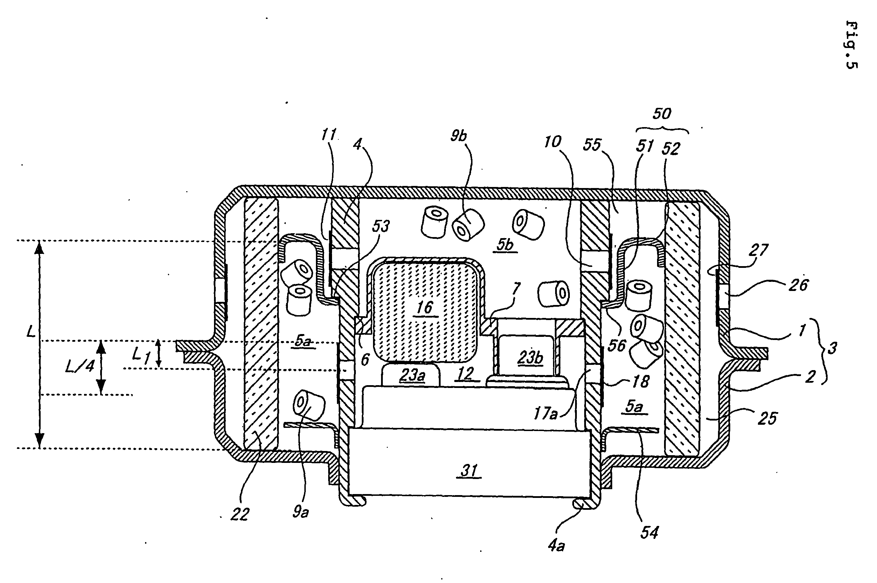

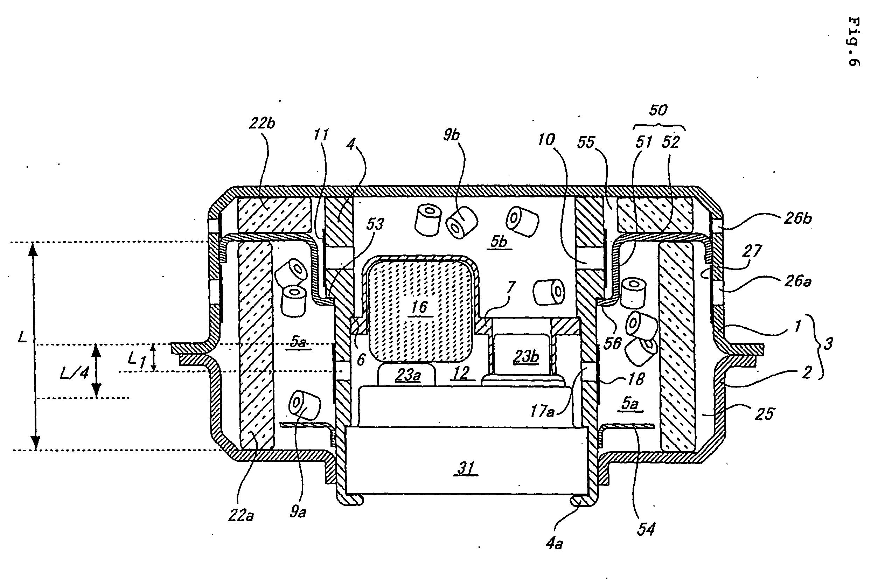

The gas generator for an air bag not in accordance with the present invention may employ embodiments shown in Figs. 5 and 6. In Figs. 5 and 6, each of members and portions is designated with the same numeral as that of Fig. 1, and a description thereof is omitted.

In a retainer 50 shown in Fig. 5, the axial end of the first combustion chamber 5a is defined, and the axial average length of the first combustion chamber 5a is adjusted. However, the retainer 50 does not divide the coolant means 22. Therefore, a working gas generated in the second combustion chamber 5b flows into the flow-path 55 through the communication hole 10, the gas passes through the same coolant means 22 as the working gas generated in the first combustion chamber 5a passes through, and then passes through the gap 25 to be discharged from the gas discharging port 26. In this case, even if the working gas is generated only in the first combustion chamber 5a and the gas generating agent in the second combustion chamber 5b is not yet ignited, the working gas generated in the first combustion chamber 5a opens the gas discharging port 26 and therefore, the gas does not flow into the flow-path 55 through the coolant means 22 to rupture the seal tape 11 which closes the communication hole 10.

In Fig 6, a retainer 50 defines the axial end of the first combustion chamber 5a and adjusts the axial average length (L) of the first combustion chamber 5a. And an outer wall end surface of the retainer 50 abuts against an inner wall surface of the diffuser shell 1 to separate flow-paths for a working gas generated in the first combustion chamber 5a and a working gas generated in the second combustion chamber 5b from each other. Therefore, a working gas generated in the first combustion chamber 5a is discharged from the gas discharging port 26a, and a working gas generated in the second combustion chamber 5b is discharged from the gas discharging port 26b.

The air bag apparatus of the present invention using the above-described gas generator for the air bag comprises an actuation signal-outputting means including an impact sensor and a control unit, and a module case including the air bag gas generator 100 and an air bag. The air bag gas generator 100 is connected to the actuation signal-outputting means (the impact sensor and the control unit) on the first and second igniters 23a and 23b side. In the air bag apparatus having such a structure, by appropriately setting an actuation signal outputting condition in the actuation signal outputting means, it is possible to adjust the gas generation amount in accordance with a degree of an impact and to adjust an expansion speed of the air bag. As a structure of other than the gas generator in this air bag apparatus, one disclosed in JP-A No. 11-334517 can be employed.

The gas generator for the air bag of the present invention will be explained based on the drawings showing a preferred embodiment.

Fig. 1 is a vertical sectional view showing one embodiment of the gas generator for the air bag of the invention.

The gas generator shown in this embodiment has two combustion chambers in the housing and two ignition means respectively corresponding to the combustion chambers. More specifically, the housing 3 formed by joining a diffuser shell 1 having a gas discharging port 26 and a closure shell 2 forming an inner accommodating space together with the diffuser shell 1. An inner cylindrical member 4 in a substantially cylindrical shape is disposed in the housing 3, and the outside thereof is the first combustion chamber 5a. An interior of the inner cylindrical member 4 is divided into the two chambers by a partition wall 7, one of the chambers closer to the diffuser shell is a second combustion chamber 5b, and the other chamber closer to the closure shell is an ignition means accommodating chamber 12. The partition wall 7 is engaged to a step-notched portion 6 formed in an inner surface of the inner cylindrical member 4. In this embodiment also, a cylindrically formed peripheral wall (i.e., cylindrical peripheral wall) of the inner cylindrical member 4 is formed with a through-hole. In this embodiment, among the through-holes, the one which is open at the second combustion chamber is the communication hole 10, and the other one which is open at the ignition means accommodating chamber 12 is the first flame-transferring port 17a.

Gas generating agents 9a and 9b are charged into the respective two combustion chambers 5a and 5b defined in the housing 3. The first gas generating agent 9a is charged into the first combustion chamber 5a, and the second gas generating agent 9b is charged into the second combustion chamber 5b. Each of the gas generating agents is ignited and burnt by actuation of the ignition means to generate a working gas for inflating an air bag. Shapes, compositions, composition ratios and amounts of the first and second gas generating agent 9a and 9b in the respective combustion chambers may be different from each other. Especially in this embodiment, the first gas generating agent 9a is a gas generating agent including fuel and oxidizing agent. Guanidine derivatives or a mixture thereof is used as the fuel. Basic copper nitrate is used as the oxidizing agent. The same material as that of the first gas generating agent is used for the second gas generating agent 9b as well.

A retainer 50 having a cylindrical portion 51 in a shape such as to surround a cylindrical peripheral wall of the inner cylindrical member and an annular partition wall portion 52 is disposed on the axial end in the diffuser shell 1 side of the first combustion chamber 5a. The partition wall portion 52 defines the axial length of the first combustion chamber 5a. That is, the retainer 50 comprises the cylindrical portion 51 disposed to face the inner cylindrical member at a predetermined distance and the annular partition wall portion 52 which is bent outwardly into a flange-like shape from the cylindrical portion 51. And further, an inwardly directed flange-like engaging portion 56 is formed opposite to the partition wall portion 52 on the cylindrical portion 51. An outer periphery of the inner cylindrical member is formed with a step-notched portion 53 formed by stepwisely notching the outer periphery in the closure shell 2 side. The retainer 50 is disposed and fixed by engaging the engaging portion 56 to the step-notched portion 53. In the retainer 50 shown in Fig. 1, when the first gas generating agent is burnt at activation of the gas generator, the retainer 50 is pushed in a supporting direction by the step-notched portion 53 by the combustion pressure, and a fixed state and ignition state thereof become further reliable.

In the retainer 50 shown in this embodiment, since the cylindrical portion 51 is disposed to face the communication hole 10 without closing the same, a working gas which is generated by combustion of the second gas generating agent 9b and discharged from the communication hole 10 once collides against the cylindrical portion 51. Therefore, if the second gas generating agent 9b generates solid combustion products such as fluid or semifluid at the time of combustion, the combustion products collide against the cylindrical portion 51 and are removed from the working gas. As a result, when the gas generating agent generating such solid combustion products is used as the second gas generating agent 9b, the solid combustion products are largely removed by the cylindrical portion 51, so that an amount of the later-described second coolant means 22b and a thickness thereof in the radial direction can be reduced.

In the retainer 50, by adjusting the location thereof or the position of the partition wall portion 52, an inner shape, a capacity and the like of the first combustion chamber 5a can be adjusted. Therefore, it is possible to adjust a ratio (D/L) of a radial average distance (D) of the combustion chamber 5a to an axial average length (L) of the combustion chamber 5a to be in the range of 0.2 to 2.0, preferably of 0.4 to 1.0 by adjusting the shape or position of the retainer 50. In this embodiment, and end surface 2 of the first combustion chamber 5a in the closure shell 2 side is defined by an inner surface of the closure shell 2, and the gas generating agent 9a in the combustion chamber 5a is supported by an underplate 54.

The retainer 50 shown in this embodiment defines a flow-path 55 on the opposite side to the first combustion chamber 5a so that a working gas generated by combustion of the second gas generating agent 9b passes through the flow-path. The flow-path 55 and the second combustion chamber 5b can communicate with each other through a communication hole 10 formed in a partition wall of the inner cylindrical member 4.

An ignition means including two igniters 23a and 23b and a transfer charge 16 charged into an aluminum cup is accommodated in the ignition means accommodating chamber 12. The two igniters 23a and 23b are fixed to a collar assembly 31. The collar assembly 31 is fixed by crimping a lower end 4a of the inner cylindrical member 4. The first igniter 23a and the second igniter 23b are accommodated in spaces, inside the inner cylindrical member, defined by the partition wall 7 respectively. The transfer charge 16 is arranged above the first igniter 23a in the space where the first igniter 23a is accommodated. The igniters 23a and 23b stored in the ignition accommodating chamber 12 are arranged such that flames generated by activation of the first igniters 23a does not mix with flames generated by activation of the second ignites 23b.

The space in which the first igniter 23a is accommodated and the first combustion chamber 5a can communicate with each other through a flame-transferring port 17a formed in a peripheral wall of the inner cylindrical member 4. In Fig 1, the flame-transferring port 17a is formed such that a distance L₁ from the center of the axial average length in the first combustion chamber to the center of the flame-transferring hole 17a is not more than 1/4 of the axial average length L in the first combustion chamber. Preferably, the flame-transferring port 17 is formed at the center of the first combustion chamber 5a in the axial direction. With this design, flames caused by combustion of the transfer charge 16 is ejected to the substantially central position of the first combustion chamber 5a, and the flames of the transfer charge 16 can reach the entire first combustion chamber 5a.

Meanwhile, the space where the second igniter 23b is accommodated is formed to communicate the second combustion chamber 5b, the second combustion chamber 5b can communicate a flow-path 55 defined by the retainer 50 through a communication hole 10 formed in the inner cylindrical member 4.

Working gases generated by combustion of the first gas generating agent 9a and the second gas generating agent 9b passes through annular coolant means 22 comprising laminated wire mesh or expanded metal to be discharged from a gas discharging port 26. Especially in this embodiment, the working gases generated from gas generating agents 9a and 9b pass through different coolant means 22a and 22b. More specifically, the first coolant means 22a is disposed radially in the outside of the first combustion chamber 5a, the second coolant means 22b is disposed radially in the outside the second combustion chamber 5b through the flow-path 55, and both the coolant means 22a and 22b are separated from each other by the retainer 50.

Therefore, in the gas generator shown in this embodiment, the transfer charge 16 is burnt by actuation of the first igniter 23a, and its flame passes through the first flame-transferring port 17a and is ejected into the first combustion chamber 5a. Consequently, the first gas generating agent 9a is ignited and burnt to generate a working gas, the working gas passes through the first coolant means 22a, reaches a gap 25 and rupture a seal tape 27 to be discharged from the gas discharging port 26. On the other hand, when the second igniter 23b is actuated, its flame is ejected into the second combustion chamber 5b to ignite and burn the second gas generating agent 9b. The working gas generated by combustion of the second gas generating agent 9b is ejected outwardly from the communication hole 10 in the radial direction, and its direction is changed by the cylindrical portion 51 of the retainer 50. At the same time, the combustion products included in the working gas collide against the cylindrical portion 51. Consequently, most of the combustion products included in the working gas generated by combustion of the second gas generating agent 9b are removed or reduced. The working gas whose direction has been changed by the cylindrical portion 51 proceeds to and passes through the flow-path 55 to reach the second coolant means 22b. The working gas is cooled while it passes through the second coolant means 22b, and is purified and discharged from the gas discharging port 26 via the gap 25. When different coolant means are used for the respective working gases generated in each the combustion chamber, the respective coolant means are independent from each other, so that the actuation output of the gas generator can be adjusted easily.

Further, in the gas generator shown in this drawing, the two coolant means 22a and 22b are separately disposed, so that the purifying/cooling abilities of the coolant means 22a and 22b can be controlled respectively in accordance with the generation amount of a working gas generated in the combustion chambers 5a and 5b. And, if the second coolant means 22b cools a working gas generated by combustion of the second gas generating agent 9b, an inner diameter of the first coolant means 22a can be made larger, and thereby, the radial average distance (D) of the first combustion chamber 5a can be increased.

In Fig. 1, a numeral 11 represents a seal tape for closing the communication hole 10, a numeral 18 represents a seal tape for closing the first flame-transferring port 17a, and a numeral 27 represents a seal tape for closing the gas discharging port 26. The seal tapes are ruptured when flames or gases pass through the holes or ports.

In the above-described embodiment shown in Fig. 1, the retainer 50 shown in this embodiment ensure the axial end of the first combustion chamber 5a, defines the flow-path 55 and separates the coolant means 22a and 22b from each other.

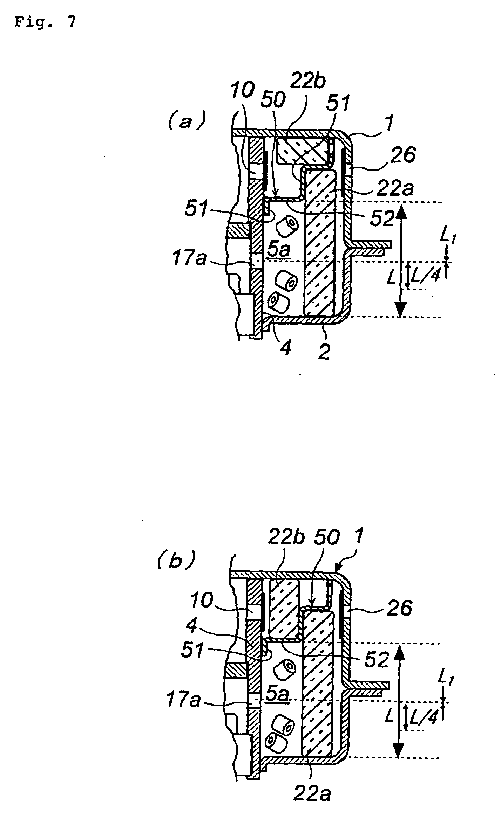

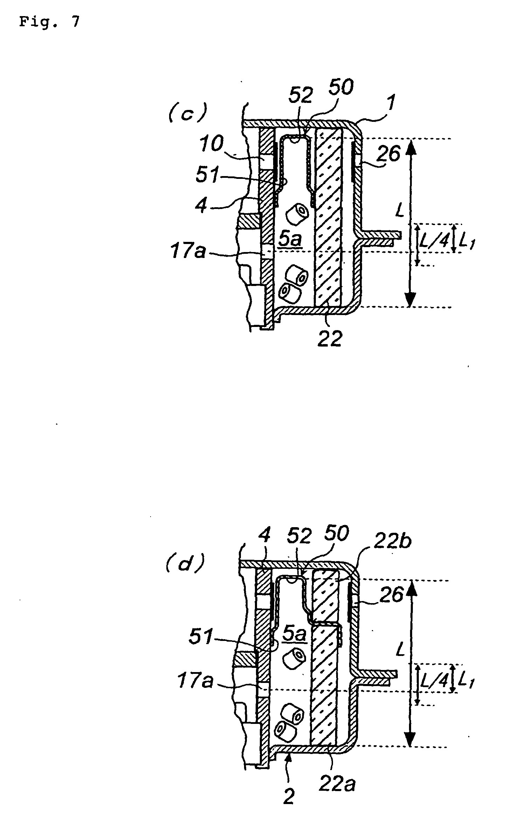

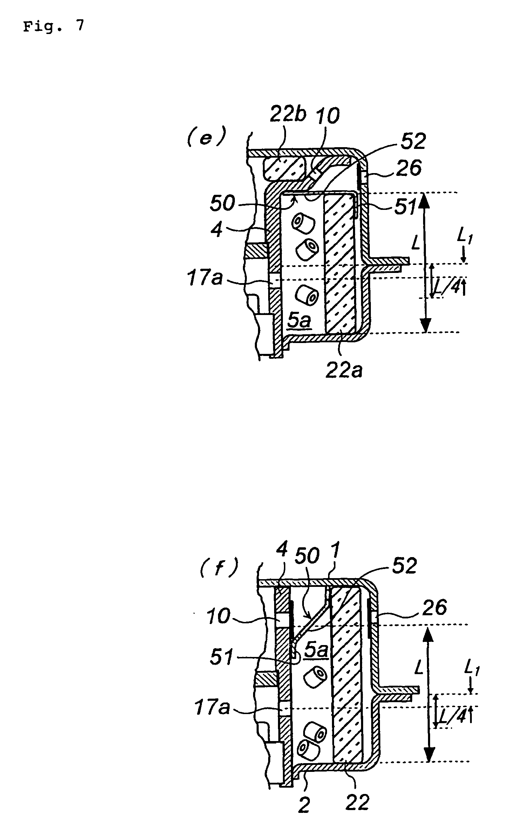

The retainer 50 may employ any of aspects shown in Figs. 7(a), (b), (d) or (e). In the aspects shown in Pigs. 7 (a) to (f), the axial average length (L) of the first combustion chamber is defined by the retainer 50, a distance L₁ from the center of an axial average length to the center of the flame-transferring port 17a in the first combustion chamber 5a is adjusted to be not more than 1/4 of the axial average length (L) of the first combustion chamber 5a.

In the retainer 50 shown in each of Figs. 7(a) and (f), part of the cylindrical portion 51 is fitted outwardly to the inner cylindrical member 4 or fitted to an inner peripheral surface or outer peripheral surface of the coolant means 22a, or fitted into the inner peripheral surface of the housing 3 so that part of the cylindrical portion 51 is supported and fixed in the housing.

Particularly, the retainer 50 shown in each of Figs. 7(a) and (f) includes the inner cylindrical portion 51 and the partition wall portion. In the aspects shown in Figs. 7(a), (c), (d) and (f), a gas ejected from the communication hole 10 collides against the cylindrical portion 51, the combustion products in the gas are collected by the cylindrical portion 51. In the aspect shown in Pig. 7(e), a gas ejected from the communication hole 10 collides against the partition wall portion 52, and the combustion products in the gas are collected by the partition wall portion 52. In the aspect shown in Fig. 7(e), however, the gas which previously passed through the second coolant means 22b is ejected from the communication hole 10. Therefore, if the combustion products are further collected by the cylindrical portion 51, a gas further purified is discharged from the gas discharging port 26. In the aspect shown in Fig. 7(b), a gas ejected from the communication hole 10 is previously purified by second the coolant means 22b and in this state, the gas collides against the cylindrical portion 51. Consequently, the combustion products can be removed more unfailingly.

In the aspects shown in Pigs. 7 (a) and (b), the cylindrical portion 51 of the retainer is divided into a portion which is fitted outwardly to the inner cylindrical member 4 and a portion facing the communication hole 10, and the partition wall portion 52 is provided between both the portions. That is, in the retainer 50 of the present invention, the cylindrical portion 51 does not necessarily have to be arranged in a single position but can be arranged in different positions such as a portion for supporting and fixing the retainer 50 in the housing and a position for covering the communication hole 10. In the aspects shown in Figs. 7(a) and (b), the direction of a gas ejected from the through-hole 10 is changed by a portion of the retainer 50 which faces the communication hole 10, and the combustion products are collected.

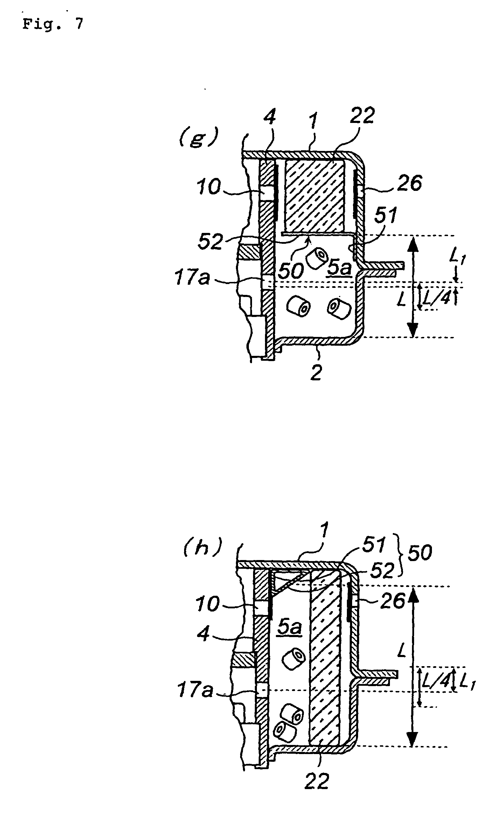

In the retainer 50 shown in Fig. 7(h), an example not in accordance with the present invention, the partition wall portion 52 is inclined in an outwardly directed flange-like shape from the cylindrical portion 51 which is fitted outwardly to the inner cylindrical member 4, and a tip end of the cylindrical portion 51 and a tip end of the partition wall portion 52 are connected to each other. With this arrangement, a cross section of the retainer 50 in the axial direction is of substantially right triangle, and its hypotenuse is the partition wall portion 52. In the retainer 50 shown in Pig. 7(h), the axial length of the first combustion chamber 5a is defined but the flow-path is not formed on the opposite side to the first combustion chamber.

In the aspects shown in Figs. 7(a) to (g), the retainer 50 is provided with the flow-path 55 on the opposite side to the first combustion chamber 5a.

In Figs. 7(a) to (h), each of members and portions which is the same as that in the gas generator shown in Fig. 1 is designated with the same numerals, and a description thereof is omitted. A numeral 22 in Figs. 7 represents a filter means.

The gas generator for an air bag not forming part of the present invention may employ embodiments shown in Figs. 5 and 6. In Figs. 5 and 6, each of members and portions which is functionally the same as that of the gas generator shown in Fig. 1 is designated with the same numeral, and a description thereof is omitted.

In a retainer 50 shown in Pig. 5, the axial end of the first combustion chamber 5a is defined, and the axial average length of the first combustion chamber 5a is adjusted. However, the retainer 50 does not divide the coolant means 22. Therefore, a working gas generated in the second combustion chamber 5b flows into the flow-space 55 through the communication hole 10, the gas passes through the same coolant means 22 as the working gas generated in the first combustion chamber 5a passes through, passes through the gap 25 to be discharged from the gas discharging port 26. In this case, even if the working gas is generated only in the first combustion chamber 5a and the gas generating agent in the second combustion chamber 5b is not yet ignited, the working gas generated in the first combustion chamber 5a opens the gas discharging port 26 and therefore, the gas does not flow into the flow-space 55 through the coolant means 22 to rupture the seal tape 11 which closes the communication hole 10.

In Fig 6, a retainer 50 defines the axial end of the first combustion chamber 5a and adjusts the axial average length (L) of the first combustion chamber 5a. And an outer wall end surface of the retainer 50 abuts against an inner wall surface of the diffuser shell 1 to separate flow-spaces for a working gas generated in the first combustion chamber 5a and a working gas generated in the second combustion chamber 5b from each other. Therefore, a working gas generated in the first combustion chamber 5a is discharged from the gas discharging port 26a, and a working gas generated in the second combustion chamber 5b is discharged from the gas discharging port 26b.

The air bag apparatus of the present invention using the above-described gas generator for the air bag comprises an actuation signal-outputting means including an impact sensor and a control unit, and a module case including the air bag gas generator 100 and an air bag. The air bag gas generator is connected to the actuation signal-outputting means (the impact sensor and the control unit) on the first and second igniters 23a and 23b side. In the air bag apparatus having such a structure, by appropriately setting an actuation signal outputting condition in the actuation signal outputting means, it is possible to adjust the gas generation amount in accordance with a degree of an impact and to adjust an expansion speed of the air bag. A structure of other than the gas generator in this air bag apparatus is comprehensible with reference of the one disclosed in JP-A No. 11-334517.

The gas generator for the air bag of the present invention will be explained based on the drawings showing a preferred embodiment.

Fig. 1 is a vertical sectional view showing one embodiment of the gas generator for the air bag of the invention.

The gas generator shown in this embodiment has two combustion chambers in the housing and two ignition means respectively corresponding to the combustion chambers. More specifically, the housing 3 formed by joining a diffuser shell 1 having a gas discharging port 26 and a closure shell 2 forming an inner accommodating space together with the diffuser shell 1. An inner cylindrical member 4 in a substantially cylindrical shape is disposed in the housing 3, and the outside thereof is the first combustion chamber 5a. An interior of the inner cylindrical member 4 is divided into the two chambers by a partition wall 7, one of the chambers closer to the diffuser shell is a second combustion chamber 5b, and the other chamber closer to the closure shell is an ignition means accommodating chamber 12. The partition wall 7 is engaged to a step-notched portion 6 formed in an inner surface of the inner cylindrical member 4.

Gas generating agents 9a and 9b are charged into the respective two combustion chambers 5a and 5b defined in the housing 3. The first gas generating agent 9a is charged into the first combustion chamber 5a, and the second gas generating agent 9b is charged into the second combustion chamber 5b. Each of the gas generating agents is ignited and burnt by actuation of the ignition means to generate a working gas for inflating an air bag. Shapes, compositions, composition ratios and amounts of the first and second gas generating agent 9a and 9b in the respective combustion chambers may be different from each other. Especially in this embodiment, the first gas generating agent 9a is a gas generating agent including fuel and oxidizing agent. Guanidine derivatives or a mixture thereof is used as the fuel. Basic copper nitrate is used as the oxidizing agent. The same material as that of the first gas generating agent is used for the second gas generating agent 9b as well.

A retainer 50 having an annular partition wall portion 52 is disposed on the axial end in the diffuser shell 1 side of the first combustion chamber 5a. The partition wall portion 52 of the retainer 50 defines the axial length of the first combustion chamber 5a and defines a flow-space for introducing a working gas generated due to combustion of the second gas generating agent to the coolant means. The retainer 50 comprises the cylindrical portion 51 disposed to face the inner cylindrical member at a predetermined distance and the annular partition wall portion 52 which is bent outwardly into a flange-like shape from the cylindrical portion 51. And further, an inwardly directed flange-like engaging portion 56 is formed opposite to the partition wall portion 52 on the cylindrical portion 51. An outer periphery of the inner cylindrical member is formed with a step-notched portion 53 formed by stepwisely notching the outer periphery in the closure shell 2 side to obtain a smaller diameter. The retainer 50 is disposed and fixed by engaging the engaging portion 56 to the step-notched portion 53. In the retainer 50 shown in Fig. 1, when the first gas generating agent is burnt at activation of the gas generator, the retainer 50 is pushed in a supporting direction by the step-notched portion 53 by the combustion pressure, and a fixed state and ignition state thereof become further reliable.

In the retainer 50 shown in this embodiment, since the cylindrical portion 51 is disposed to face the communication hole 10 without closing the same, a working gas which is generated by combustion of the second gas generating agent 9b and discharged from the communication hole 10 once collides against the cylindrical portion 51. Therefore, if the second gas generating agent 9b generates solid combustion products such as fluid or semi-fluid at the time of combustion, the combustion products collide against the cylindrical portion 51 and are removed from the working gas. As a result, when the gas generating agent generating such solid combustion products is used as the second gas generating agent 9b, the solid combustion products are largely removed by the cylindrical portion 51, so that an amount of the later-described second coolant means 22b and a thickness thereof in the radial direction can be reduced.

In the retainer 50, by adjusting the location thereof or the position of the partition wall portion 52, an inner shape, a capacity and the like of the first combustion chamber 5a can be adjusted. Therefore, it is possible to adjust a ratio (D/L) of a radial average distance (D) of the combustion chamber 5a to an axial average length (L) of the combustion chamber 5a to be in the range of 0.2 to 2.0, preferably of 0.4 to 1.0 by adjusting the shape or position of the retainer 50, as shown in Fig. 1. In this embodiment, and end surface 2 of the first combustion chamber 5a in the closure shell 2 side is defined by an inner surface of the closure shell 2, and the gas generating agent 9a in the combustion chamber 5a is supported by an underplate 54.

The retainer 50 shown in this embodiment defines a flow-space 55 on the opposite side to the first combustion chamber 5a so that a working gas generated by combustion of the second gas generating agent 9b passes through the flow-space. The flow-space 55 and the first combustion chamber are adjacent to each other in the radial direction of the housing via the retainer. In this case, the flow-space can be formed such as to go through the first combustion chamber. And the flow-space 55 and the second combustion chamber 5b can communicate with each other through a communication hole 10 formed in a peripheral wall of the inner cylindrical member 4. In other words, the communication hole 10 is closed by the later-described seal tape 11, and the seal tape is ruptured by combustion of the second gas generating agent to make the flow-space 55 communicate with the second combustion chamber 5b.

An ignition means including two igniters 23a and 23b, and a transfer charge 16 charged into an aluminum cup is accommodated in the ignition means accommodating chamber 12. The two igniters 23a and 23b are fixed to a collar assembly 31. The collar assembly 31 is fixed by crimping a lower end 4a of the inner cylindrical member 4. The first igniter 23a and the second igniter 23b are accommodated in spaces defined by the partition wall 7 respectively. The transfer charge 16 is arranged above the first igniter 23a in the space where the first igniter 23a is accommodated.

Meanwhile, the space where the second igniter 23b is accommodated is formed to communicate the second combustion chamber 5b, the second combustion chamber 5b can communicate a flow-space 55 defined by the retainer 50 through a communication hole 10 formed in the inner cylindrical member 4.

Working gases generated by combustion of the first gas generating agent 9a and the second gas generating agent 9b passes through annular coolant means 22 comprising laminated wire mesh or expanded metal to be discharged from a gas discharging port 26. Especially in this embodiment, the working gases generated from gas generating agents 9a and 9b pass through different coolant means 22a and 22b. More specifically, the first coolant means 22a is disposed radially in the outside of the first combustion chamber 5a, the second coolant means 22b is disposed radially in the outside the second combustion chamber 5b through the flow-space 55, and both the coolant means 22a and 22b are separated from each other by the retainer 50. In the gas generator shown in Fig.1, the first combustion chamber is formed to be adjacent to the inside of the first coolant means.

Therefore, in the gas generator shown in this embodiment, the transfer charge 16 is burnt by actuation of the first igniter 23a, and its flame passes through the first flame-transferring port 17a and is ejected into the first combustion chamber 5a. Consequently, the first gas generating agent 9a is ignited and burnt to generate a working gas, the working gas passes through the first coolant means 22a, and reaches a gap 25 to be discharged from the gas discharging port 26. On the other hand, when the second igniter 23b is actuated, its flame is ejected into the second combustion chamber 5b to ignite and burn the second gas generating agent 9b. A working gas generated by the combustion of the second gas generating agent 9b proceeds to and passes through the flow-space 55 via the communication hole to reach the second coolant means 22b. And the working gas is cooled and purified while passing through the second coolant 22 and passes through the gap 25 to be discharged from the gas discharging port 26. As described above, by arranging different flow-spaces or coolant means for the respective working gases generated in the combustion chambers, combustion of the gas generating agents in the respective combustion chambers can be adjusted easily, and thereby the operation output of the gas generator can be adjusted easily.

In the gas generator which is actuated as described above, even if the first gas generating agent is burnt, its flame is not ejected toward an exit (i.e., communication hole) of the second combustion chamber. Therefore, in selecting seal tapes for closing between the second combustion chamber and the flow-space, it is unnecessary to take influence by the combustion of the first gas generating agent into account. With this feature, for example, even aluminum seal tape using aluminum having lower melting point than that of stainless steel can be used.

Since the two coolant means 22a and 22b are separately disposed in the gas generator shown in this drawing, it is possible to adjust the purifying/cooling abilities of the coolant means 22a and 22b in accordance with the generation amounts of working gases generated in the combustion chambers 5a and 5b. If the working gas generated by combustion of the second gas generating agent 9b is cooled by the second coolant means 22b, an inner diameter of the first coolant means 22a can be made larger. With this, the radial average distance (D) of the first combustion chamber 5a can be increased.

In Fig. 1, a numeral 11 represents a seal tape for closing the communication hole 10, a numeral 18 represents a seal tape for closing the first flame-transferring port 17a, and a numeral 27 represents a seal tape for closing the gas discharging port 26. The seal tapes are ruptured when flames or gases pass through the holes or ports.

In the gas generator shown in Fig. 1, working gases generated in the respective combustion chambers reach the filter means through different flow-paths, and the filter means is disposed in correspondence with each combustion chamber.

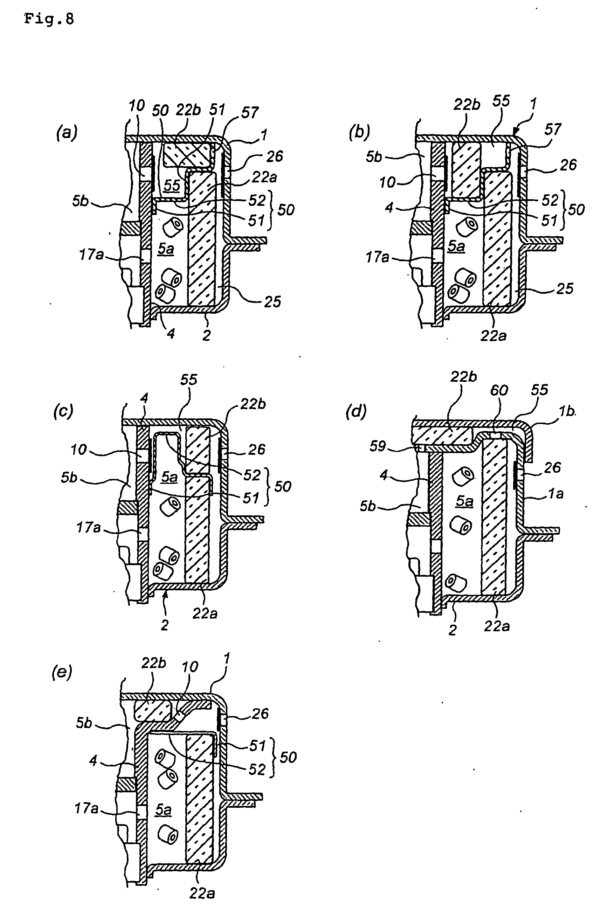

Such a gas generator can employ aspects shown in Pigs. 8(a), (b), (c) and (e). That is, Figs. 8(a), (b), (c) and (e) are sectional views of essential portions of aspects which can be carried out in the gas generator of the present invention. In Figs. 8, each of members and portions which is functionally the same as those of the gas generator shown in Fig. 1 is designated with the same numeral as that in Fig. 1, and a description thereof is omitted.

In a gas generator shown in Pig. 8(a), a retainer 50 defined the axial end of the first combustion chamber 5a defines the flow-space 55. The annular second coolant means 22b is disposed on the flow-space 55 side in the retainer 50. A working gas generated in the second combustion chamber is ejected from the through-hole 10 toward the flow-space 55, the working gas passes through the second coolant means 22b and is ejected to the gap 25 from an opening 57 formed in the retainer 50, and finally reaches the gas discharging port 26. A retainer 50 used in the gas generator shown in Pig. 8(b) is the same as the retainer 50 shown in Pig. 8(a). However, the second coolant means 22b is disposed in the vicinity of the through-hole 10. Therefore, the working gas ejected from the through-hole 10 first passes through the second coolant means 22b, then passes through the flow-space 55 and is ejected to the gap 25 from the opening 57 formed in the retainer 50.

In a gas generator shown in Pig. 8(c), by using an annular retainer 50 having a hollow partition wall portion 52, the capacity of the first combustion chamber 5a is increased, and at the same time, an amount of the second coolant means 22b and a passing area of the working gas are obtained largely. In the gas generator shown in this drawing, a working gas generated in the second combustion chamber 5b is ejected from the through-hole 10, and passes through the flow-space 55 to reach the second coolant means 22b.

In a gas generator shown in Fig. 8(d), an example not in accordance with the present invention, a cover shell 1b is provided outside the diffuser shell 1a, and a gap serving as the flow-space 55 is formed therebetween. A working gas generated in the second combustion chamber 5b, is ejected from an opening 59 of a ceiling (upper side in the drawing) of the diffuser shell 1a into the gap between the diffuser shell 1a and the cover shell 1b, passes through the second coolant means 22b and then through the flow-space 55 to reach the first coolant means 22a from an opening 60 formed just above the first coolant means 22a.

In a gas generator shown in Fig. 8(e), an end of the inner cylindrical member 4 in the diffuser shell 1 side is formed into a substantially outwardly directed flange-like shape, and the through-hole 10 is provided in the flange-like portion. The retainer 50 engages the flange-like portion to form the flow-space 55. The second coolant means 22b is disposed on the flange-like portion in the second combustion chamber 5b side. In the gas generator shown in this drawing, a working gas generated in the second combustion chamber passes through the second coolant means 22b and then is ejected from the through-hole 10 of the inner cylindrical member 4, and passes through the flow-space 55 to reach the gas discharging port 26.

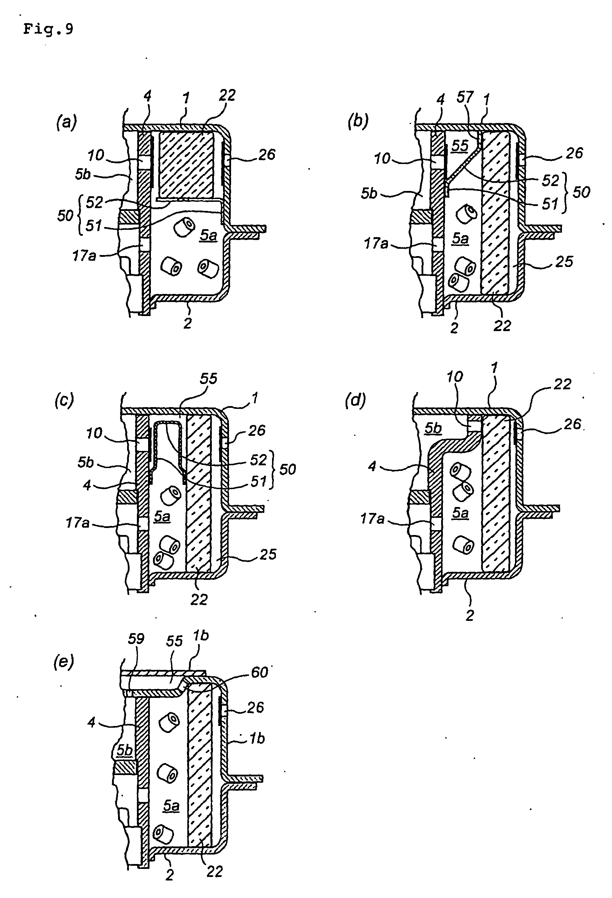

As another example not in accordance with the present invention, a gas generator may be provided in which flow-paths of working gases generated in the respective combustion chambers are made differently from each other, the working gases pass through a single coolant means. That is, in this gas generator, working gases generated in the respective combustion chambers pass through the same coolant means. In this gas generator of this example, the combustion chambers are spatially connected to each other only through the coolant means. This gas generator can employ aspects shown in Pigs. 9(a) to (e). In Figs. 9, each of members and portions which is functionally the same as that of the gas generator shown in Fig. 1 is designated with the same numeral, and a description thereof is omitted.

In a gas generator shown in Fig. 9(a), a coolant means 22 is disposed adjacent to the first combustion chamber 5a in the axial direction, a space where the coolant means 22 is disposed is practically partitioned from the first combustion chamber 5a by the retainer 50. In the gas generator shown in this drawing, a working gas generated in the second combustion chamber 5b passes through the coolant means 22 and is discharged from the gas discharging port 26. Therefore, the working gas never flows into the first combustion chamber 5a. A working gas generated in the first combustion chamber 5a flows into a space where the coolant means 22 is positioned from a gap between an inner edge of the retainer 50 and the inner cylindrical member 4, and then passes through the coolant means and is discharged from the gas discharging port 26.

In a gas generator shown in Fig. 9(b), a working gas generated in the second combustion chamber 5b passes through the through-hole 10 of the inner cylindrical member 4 and reaches the flow-space 55, passes through this space and is ejected into the coolant means 22 from the opening 57 formed in the retainer 50. A working gas flowing into the coolant means 22 passes through the gap 25 and is discharged from the gas discharging port 26, so that the gas never flows into the first combustion chamber 5a.

In a gas generator shown in Fig. 9(c), an annular retainer 50 having a hollow partition wall portion 52 is used, the capacity of the first combustion chamber 5a is increased, and at the same time, an amount of the second coolant means 22b and a passing area of the working gas are obtained largely. In the gas generator shown in this drawing, a working gas generated in the second combustion chamber 5b is ejected from the through-hole 10 into the flow-space 55, passes through the flow-space 55 to reach the coolant means 22, and further passes through the coolant means 22 to reach the gap 25 and finally toward the gas discharging port 26, so that the gas never flows into the first combustion chamber 5a through the coolant means 22.

In a gas generator shown in Fig. 9(d), an inner cylindrical member 4 in which its portion near the through-hole 10 swells to contact with an inner periphery of the coolant means 22 is used. Therefore, a working gas generated in the second combustion chamber 5b passes through the through-hole 10 of the inner cylindrical member 4 and is directly ejected into the coolant means 22. and flows through the coolant means 22 toward the gas discharging port 26. Thus, a working gas generated in the second combustion chamber 5b never passes through the coolant means 22 nor flows into the first combustion chamber 5a.

In a gas generator shown in Pig. 9(e), a cover shell 1b is provided outside the diffuser shell 1a, and a flow-space 55 is formed therebetween. A working gas generated in the second combustion chamber 5b is ejected from an opening 59 of a ceiling of the diffuser shell 1a into the flow-space 55, passes through the flow-space 55, is ejected into the coolant means 22 from an opening 60 provided just above the coolant means 22 in the diffuser shell 1a, and flows through the coolant means 22 toward the gas discharging port 26. Thus, a working gas generated in the second combustion chamber 5b never passes through the coolant means 22 nor flows into the first combustion chamber 5a.

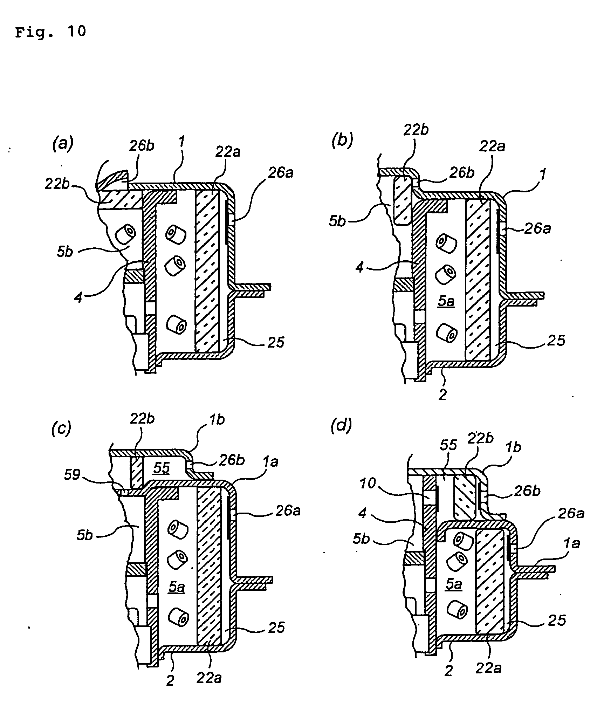

As another example, not in accordance with the present invention, a gas generator may be provided in which flow-paths of working gasses generated in the combustion chambers are different from each other, the gasses are introduced to different coolant means and discharged from different gas discharging ports. In such a gas generator, it is necessary to form different gas discharging ports 26a and 26b for the respective combustion chambers 5a and 5b, but the gas discharging ports do not necessarily have to be formed in a peripheral surface of the cylindrical housing. Such a gas generator can employ aspects shown in Figs. 10(a) to (d). In Figs. 10, each of members and portions which is functionally the same as that of the gas generator shown in Fig. 1 is designated with the same numeral, and a description thereof is omitted.

In a gas generator shown in Fig. 10(a), a second gas discharging port 26a is formed on a ceiling side of the diffuser shell 1, and a second coolant means 22b is disposed in the diffuser shell 1 side in the second combustion chamber 5b. A working gas generated in the first combustion chamber 5a passes through a first coolant means 22a and is discharged from a first gas discharging port 26a. A working gas generated in the second combustion chamber 5b passes through the second coolant means 22b and is discharged from a second gas discharging port 26b. Thus, in this gas generator, the working gasses generated in the respective combustion chambers are not mixed with each other in the housing, nor the working gas generated in one of the combustion chambers does not flow into the other combustion chamber.

In a gas generator shown in Fig. 10 (b) also, like the gas generator shown in Fig. 10 (a), the second gas discharging port 26b is provided on the ceiling side of the diffuser shell 1, and the second coolant means 22b is provided in the second combustion chamber 5b in the diffuser shell 1 side. Especially in the gas generator shown in this drawing, a center portion of the ceiling of the diffuser shell 1 projects in the axial direction, and the second gas discharging port 26b is provided in the projected peripheral surface. Therefore, in this gas generator also, working gases generated in the respective combustion chambers are not mixed with each other in the housing, nor a working gas generated in one of the combustion chambers does not flow into the other combustion chamber.

In a gas generator shown in Fig. 10(c), a cover shell 1b is provided outside the diffuser shell 1a, and a flow-space 55 is formed therebetween. In this gas generator shown in this drawing, the cover shell 1b constitutes the housing together with the diffuser shell 1a and the closure shell 2. Especially, this cover shell 1b is formed into a cylindrical shape with a bottom and is provided at its peripheral surface with a second gas discharging port 26b. As a result, a working gas generated in the second combustion chamber 5b is ejected from an opening 59 in the ceiling side of the diffuser shell, passes through the second coolant means 22b and then through the flow-space 55, and is discharged from the second gas discharging port out of the housing. Therefore, the working gases generated in the respective combustion chambers are not mixed with each other in the housing, nor the working gas generated in one of the combustion chambers does not flow into the other combustion chamber.

In a gas generator shown in Fig. 10(d), an inner cylindrical member 4 is provided to go through a ceiling of the diffuser shell 1a, and an opening end of the inner cylindrical member 4 is closed with a cover shell 1b which is integrally formed together with the diffuser shell 1a. Thus, in the gas generator shown in this drawing also, the cover shell 1b constitutes the housing together with the diffuser shell 1a and the closure shell 2. In this gas generator, the axial direction of the first combustion chamber 5a is defined by an inner surface of the ceiling of the diffuser shell 1a, and the flow-space 55 is formed between the diffuser shell 1a and the cover shell 1b. The second coolant means is provided inside the cover shell 1b. In this gas generator, a working gas generated in the second combustion chamber 5b flows into the flow-space 55 from the through-hole formed in the inner cylindrical member 4, passes through the second coolant means 22b, and is discharged out of the housing from the second gas discharging port 26b. Thus, in the gas generator shown in this drawing also, the working gases generated in the respective combustion chambers are not mixed with each other in the housing, nor the working gas generated in one of the combustion chambers does not flow into the other combustion chamber.

Such a gas generator can employ aspects shown in Figs. 5 and 6. In Figs. 5 and 6, each of members and portions which is functionally the same as that of the gas generator shown in Fig. 1 is designated with the same numeral, and a description thereof is omitted.

In a retainer 50 shown in Fig. 5, the axial end of the first combustion chamber 5a is defined, and the axial average length of the first combustion chamber 5a is adjusted. However, the retainer 50 does not divide the coolant means 22. Therefore, a working gas generated in the second combustion chamber 5b flows into the flow-space 55 through the communication hole 10, the gas passes through the same coolant means 22 as the working gas generated in the first combustion chamber 5a passes through, and then passes through the gap 25 to be discharged from the gas discharging port 26. In this case, even if the working gas is generated only in the first combustion chamber 5a and the gas generating agent in the second combustion chamber 5b is not yet ignited, the working gas generated in the first combustion chamber 5a opens the gas discharging port 26 and therefore, the gas does not flow into the flow-space 55 through the coolant means 22 to rupture the seal tape 11 which closes the communication hole 10.

In Fig 6, a retainer 50 defines the axial end of the first combustion chamber 5a and adjusts the axial average length (L) of the first combustion chamber 5a. And an outer wall end surface of the retainer 50 abuts against an inner wall surface of the diffuser shell 1 to separate flow-spaces for a working gas generated in the first combustion chamber 5a and a working gas generated in the second combustion chamber 5b from each other. Therefore, a working gas generated in the first combustion chamber 5a is discharged from the gas discharging port 26a, and a working gas generated in the second combustion chamber 5b is discharged from the gas discharging port 26b.

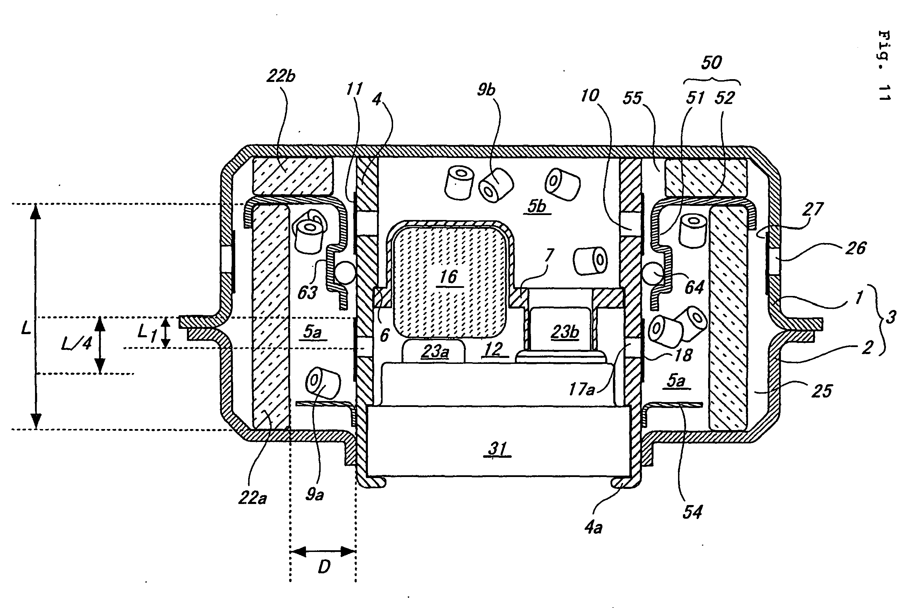

Fig. 11 shows a gas generator characterized in an engaged portion between the inner cylindrical member and the retainer. That is, in the gas generator shown in this drawing, a cylindrical portion (or inner cylindrical portion) 51 of the retainer 50 is provided with a swelling portion 63 having part thereof swelled outwardly in the radial direction, and an O-ring 64 is disposed between the swelling portion 63 and the inner cylindrical member. With this structure, the O-ring 64 seals between the inner cylindrical member 4 and the retainer 50 (especially swelling portion 63), and even if the first gas generating agent 9a is burnt, a working gas does not flow into the flow-space (or flow-path) 55. When the first gas generating agent 9a and the second gas generating agent 9b are burnt simultaneously, a pressure inside the first combustion chamber 5a is sufficiently increased by combustion of the first gas generating agent 9a and thus, a working gas generated in the second combustion chamber 9b does not flow into the first combustion chamber 5a. Therefore, when the engagement structure between the inner cylindrical member and the retainer is formed as shown in Fig. 11, it is unnecessary to adjust the size of the cylindrical portion (or inner cylindrical portion) 51 of the retainer 50 to fit outwardly the inner cylindrical member 50, and a gap may be disposed therebetween.

Especially when the engagement structure between the inner cylindrical member and the retainer is formed as shown in Fig. 11, the retainer 50 is supported by the second coolant means 22b, and thereby, the retainer 50 is prevented from moving in the axial direction of the housing. And, the cutting process of the outer peripheral surface of the inner cylindrical member (i.e., outer peripheral surface of the cylindrical peripheral wall) can be eliminated, so that it is advantageous to manufacturing and costs.

Concerning the engagement structure between the inner cylindrical member and the retainer, in the gas generator shown in Fig. 1, the engaging portion 56 provided on an end of the cylindrical portion (or inner cylindrical portion) 51 is engaged to the step-notch 53 of the inner cylindrical member, thereby disposing and fixing the retainer 50 in the housing, and in the gas generator shown in Figs. 8(a) to (d) and (f), part of the cylindrical portion 51 is formed into such a size to be fitted outwardly to the cylindrical peripheral wall of the inner cylindrical member 4, the retainer 50 is press-fitted outside the inner cylindrical member, and the retainer 50 is disposed and fixed in the housing.

In Fig. 11, each of members and portions which is functionally the same as that of the gas generator shown in Fig. 1 is designated with the same numeral, and a description thereof is omitted.

The air bag apparatus of the present invention using the above-described gas generator for the air bag comprises an actuation signal-outputting means including an impact sensor and a control unit, and a module case including the air bag gas generator 100 and an air bag. The air bag gas generator is connected to the actuation signal-outputting means (the impact sensor and the control unit) on the first and second igniters 23a and 23b side. In the air bag apparatus having such a structure, by appropriately setting an actuation signal outputting condition in the actuation signal outputting means, it is possible to adjust the gas generation amount in accordance with a degree of an impact and to adjust an expansion speed of the air bag. A structure of other than the gas generator in this air bag apparatus is comprehensible with reference of the one disclosed in JP-A No. 11-334517.

## Claims

1. A gas generator for an air bag comprising, in a cylindrical housing (3) having a gas discharging port (26), an inner cylindrical member (4) having a cylindrical peripheral wall provided with a through-hole, at least either of an ignition means (23a, 23b) and a gas generating agent (9a, 9b) disposed in the inner cylindrical member (4), and a retainer (50), which has a cylindrical portion surrounding part of the inner cylindrical member (4) and a flange-shaped partition wall portion integrally formed on the cylindrical portion, disposed outside the inner cylindrical member (4), wherein a first combustion chamber (5a) for accommodating the gas generating agent (9a) is provided radially in the outside of the inner cylindrical member (4), and a peripheral wall of the retainer (50) is formed into a shape and size capable of defining at least an axial end of the first combustion chamber (5a) and is provided on the axial end of the first combustion chamber (5a), wherein, inside the inner cylindrical member (4), an ignition means accommodating chamber (12) and a second combustion chamber (5b) are defined adjacent to each other in the axial direction by a partition wall (7), and a communication hole (10) of the inner cylindrical member (4) is open at the second combustion chamber (5b), wherein an annular coolant means (22a, 22b) for purifying or cooling a gas generated by combustion of the gas generating agent (9a, 9b) stored in the housing (3) is accommodated in the housing (3), wherein a cylindrical portion of the retainer (50) is positioned with a distance from an outer peripheral surface of the cylindrical peripheral wall and faces the outer peripheral surface, **characterized by** at least one of the cylindrical portion and the peripheral wall changes flow direction of a gas ejected from a through-hole formed in the cylindrical peripheral wall of the inner cylindrical member (4) and collects combustion products other than gaseous material included in the gas, wherein all or part of the cylindrical portion of the retainer (50) is fitted to an outer peripheral surface of the coolant means (22a, 22b).

2. A gas generator for an air bag according to claim 1, wherein the cylindrical portion of the retainer (50) exists at a horizontally projected position of a through-hole provided on cylindrical peripheral wall of the inner cylindrical member (4).

3. A gas generator for an air bag according to claim 1 or 2, wherein the cylindrical portion of the retainer (50) faces the communication hole of the inner cylindrical member (4) without closing the communication hole.

4. A gas generator for an air bag according to any one of claims 1 to 3, wherein part of the cylindrical portion of the retainer (50) is fitted outwardly to the cylindrical peripheral wall of the inner cylindrical member (4).

5. A gas generator for an air bag according to any one of claims 1 to 4, wherein all or part of the cylindrical portion of the retainer (50) is fitted to at least one of an inner peripheral surface of the coolant means (22a, 22b) and an inner peripheral surface of a housing peripheral wall.

6. A gas generator for an air bag according to any one of claims 1 to 5, wherein an end opening of the cylindrical portion is integrally formed with a engaging portion which engages a cylindrical peripheral wall of an inner cylindrical member (4) in an inwardly directed flange-like shape.

7. A gas generator for an air bag according to claim 6, wherein the housing comprises a diffuser shell (1) having a gas discharging port (26) and a closure shell (2) forming an inner space together with the diffuser shell (1), the inner cylindrical member (4) includes a step-notch (53) formed by stepwisely notching an outer peripheral surface of the inner cylindrical member (4) in the closure shell side, and a engaging portion of the retainer (50) engages the notch.

8. A gas generator for an air bag according to any one of claims 1 to 7, wherein, in the retainer (50), the partition wall portion receives combustion pressure of the first gas generating agent (9a) accommodated in the first combustion chamber (5a), and thereby the engaging portion is pushed against a step-notched portion (53) of the inner cylindrical member (4).

9. A gas generator for an air bag according to any one of claims 1 to 8, wherein the inside the inner cylindrical member (4) is further divided into an ignition means accommodating chamber (12) and a second combustion chamber (5b) by a partition wall (7), and the retainer (50) collects combustion products other than gaseous material generated by combustion of the second gas generating agent.

10. A gas generator for an air bag according to any one of claims 1 to 9, wherein the gas generating agent (9a) accommodated in the first combustion chamber (5a) includes fuel and oxidizing agent, the oxidizing agent is basic metal nitrate.

11. A gas generator for an air bag according to claim 10, wherein the fuel is guanidine derivatives or a mixture thereof.

## Patentansprüche

1. Gasgenerator für einen Airbag, der in einem zylindrischen Gehäuse (3) mit einer Gasaustrittsöffnung (26) ein inneres zylindrisches Element (4) mit einer zylindrischen Umfangswand, die mit einem Durchgangsloch versehen ist, ein Zündmittel (23a, 23b) oder/und ein Gaserzeugungsmittel (9a, 9b), das in dem inneren zylindrischen Element (4) angeordnet ist, sowie ein Halteelement (50) umfasst, das einen zylindrischen Abschnitt, der einen Teil des inneren zylindrischen Elementes (4) umschließt, und einen flanschförmigen Trennwandabschnitt aufweist, der integral an dem zylindrischen Abschnitt ausgebildet ist, und das außerhalb des inneren zylindrischen Elementes (4) angeordnet ist, wobei eine erste Verbrennungskammer (5a), die das Gaserzeugungsmittel (9a) aufnimmt, radial an der Außenseite des inneren zylindrischen Elementes (4) vorhanden ist und eine Umfangswand des Halteelementes (50) in einer Form und einer Größe ausgebildet ist, durch die es wenigstens ein axiales Ende in der ersten Verbrennungskammer (5a) bilden kann, und an dem axialen Ende der ersten Verbrennungskammer (5a) vorhanden ist, wobei im Inneren des inneren zylindrischen Elementes (4) eine Zündmittel-Aufnahmekammer (12) und eine zweite Verbrennungskammer (5b) durch eine Trennwand (7) in der axialen Richtung aneinandergrenzend ausgebildet sind und ein Verbindungsloch (10) des inneren zylindrischen Elementes (4) an der zweiten Verbrennungskammer (5b) offen ist, ringförmige Kühleinrichtungen (22a, 22b) zum Reinigen oder Kühlen eines Gases, das durch Verbrennung des in dem Gehäuse (3) aufbewahrten Gaserzeugungsmittels (9a, 9b) erzeugt wird, in dem Gehäuse (3) aufgenommen ist, und ein zylindrischer Abschnitt des Halteelementes (50) mit einem Abstand zu einer Außenumfangsfläche der zylindrischen Umfangswand positioniert ist und der Außenumfangsfläche zugewandt ist, **dadurch gekennzeichnet, dass** der zylindrische Abschnitt oder/und die Umfangswand die Strömungsrichtung eines Gases ändert, das über ein in der zylindrischen Umfangswand des inneren zylindrischen Elementes (4) ausgebildetes Durchgangsloch ausgestoßen wird, und andere Verbrennungsprodukte als in dem Gas enthaltenes gasförmiges Material auffängt, wobei der gesamte zylindrische Abschnitt des Halteelementes (50) oder einen Teil desselben auf eine Außenumfangsfläche der Kühleinrichtungen (22a, 22b) aufgesetzt ist.

2. Gasgenerator für einen Airbag nach Anspruch 1, wobei sich der zylindrische Abschnitt des Halteelementes (50) an einem horizontal vorstehenden Abschnitt eines Durchgangslochs befindet, das an der zylindrischen Umfangswand des inneren zylindrischen Elementes (4) vorhanden ist.

3. Gasgenerator für einen Airbag nach Anspruch 1 oder 2, wobei der zylindrische Abschnitt des Halteelementes (50) dem Verbindungsloch des inneren zylindrischen Elementes (4) zugewandt ist, ohne das Verbindungsloch zu verschließen.

4. Gasgenerator für einen Airbag nach einem der Ansprüche 1 bis 3, wobei ein Teil des zylindrischen Abschnitts des Halteelementes (5) außen auf die zylindrische Umfangswand des inneren zylindrischen Elementes (4) aufgepasst ist.

5. Gasgenerator für einen Airbag nach einem der Ansprüche 1 bis 4, wobei der gesamte zylindrische Abschnitt des Halteelementes (50) oder ein Teil desselben auf eine Innenumfangsfläche der Kühleinrichtungen (22a, 22b) oder eine Innenumfangsfläche einer Gehäuse-Umfangswand aufgesetzt ist.

6. Gasgenerator für einen Airbag nach einem der Ansprüche 1 bis 5, wobei eine Endöffnung des zylindrischen Abschnitts integral mit einem Eingriffsabschnitt ausgebildet ist, der eine zylindrische Umfangswand eines inneren zylindrischen Elementes (4) mit einer nach innen gerichteten flanschartigen Form in Eingriff bringt.

7. Gasgenerator für einen Airbag nach Anspruch 10, wobei das Gehäuse eine Diffusor-Hülle (1) mit einer Gasaustrittsöffnung (26) und eine Verschluss-Hülse (2) umfasst, die zusammen mit der Diffusor-Hülle (1) einen Innenraum bildet, das innere zylindrische Element (4) eine Stufen-Einkerbung (53) enthält, die ausgebildet wird, indem eine Außenumfangsfläche des inneren zylindrischen Elementes (4) an der Seite der Verschluss-Hülle schrittweise eingekerbt wird, und ein Eingriffsabschnitt des Halteelementes (50) mit der Einkerbung in Eingriff ist.

8. Gasgenerator für einen Airbag nach einem der Ansprüche 1 bis 7, wobei in dem Halteelement (50) der Trennwandabschnitt Verbrennungsdruck des ersten Gaserzeugungsmittels (9a) empfängt, das in der ersten Verbrennungskammer (5a) aufgenommen ist, und dadurch der Eingriffsabschnitt an einen Stufen-Einkerbungsabschnitt (53) des inneren zylindrischen Elementes (4) gedrückt wird.

9. Gasgenerator für einen Airbag nach einem der Ansprüche 1 bis 8, wobei das Innere des inneren zylindrischen Elementes (4) durch eine Trennwand (7) weiter in eine Zündmittel-Aufnahmekammer (12) und eine zweite Verbrennungskammer (5b) geteilt ist und das Halteelement (50) andere Verbrennungsprodukte als durch Verbrennung des zweiten Gaserzeugungsmittels erzeugtes gasförmiges Material auffängt.

10. Gasgenerator für einen Airbag nach einem der Ansprüche 1 bis 9, wobei das in der ersten Verbrennungskammer (5a) aufgenommene Gaserzeugungsmittel (9a) Brennstoff und Oxidierungsmittel enthält und das Oxidierungsmittel basisches Metallnitrat ist.

11. Gasgenerator für einen Airbag nach Anspruch 10, wobei es sich bei dem Brennstoff um Guanidin-Derivate oder ein Gemisch aus diesen handelt.

## Revendications

1. Générateur de gaz pour airbag comprenant, dans un logement cylindrique (3) comportant un orifice d'évacuation de gaz (26), un organe cylindrique interne (4) comportant une paroi périphérique cylindrique pourvue d'un trou traversant, au moins un moyen d'allumage (23a, 23b) ou un agent de génération de gaz (9a, 9b) disposé dans l'organe cylindrique interne (4), et un élément de retenue (50), qui a une portion cylindrique entourant une partie de l'organe cylindrique interne (4) et une portion de cloison en forme de bride formée d'un seul tenant sur la portion cylindrique, disposée à l'extérieur de l'organe cylindrique interne (4), dans lequel une première chambre de combustion (5a) permettant de loger l'agent de génération de gaz (9a) est disposée radialement à l'extérieur de l'organe cylindrique interne (4), et une paroi périphérique de l'élément de retenue (50) a une forme et une taille capables de définir au moins une extrémité axiale de la première chambre de combustion (5a) et est disposée sur l'extrémité axiale de la première chambre de combustion (5a), dans lequel, à l'intérieur de l'organe cylindrique interne (4), une chambre de logement de moyen d'allumage (12) et une seconde chambre de combustion (5b) sont définies comme étant adjacentes l'une par rapport à l'autre dans la direction axiale par une cloison (7), et un trou de communication (10) de l'organe cylindrique interne (4) est ouvert au niveau de la seconde chambre de combustion (5b), dans lequel un moyen de réfrigérant annulaire (22a, 22b) permettant de purifier ou de refroidir un gaz généré par combustion de l'agent de génération de gaz (9a, 9b) stocké dans le logement (3) est logé dans le logement (3), dans lequel une portion cylindrique de l'élément de retenue (50) est positionnée à une certaine distance d'une surface périphérique externe de la paroi périphérique cylindrique et fait face à la surface périphérique externe, **caractérisé en ce qu'**au moins l'une de la portion cylindrique et de la paroi périphérique modifie la direction d'écoulement d'un gaz éjecté à partir d'un trou traversant formé dans la paroi périphérique cylindrique de l'élément cylindrique interne (4) et collecte des produits de combustion autres que la matière gazeuse incluse dans le gaz, dans lequel la totalité ou une partie de la portion cylindrique de l'élément de retenue (50) s'adapte à une surface périphérique externe du moyen de réfrigérant (22a, 22b).

2. Générateur de gaz pour airbag selon la revendication 1, dans lequel la portion cylindrique de l'élément de retenue (50) existe à une position en saillie horizontale d'un trou traversant disposé sur la paroi périphérique cylindrique de l'élément cylindrique interne (4).

3. Générateur de gaz pour airbag selon la revendication 1 ou 2, dans lequel la portion cylindrique de l'élément de retenue (50) fait face au trou de communication de l'organe cylindrique interne (4) sans fermer le trou de communication.

4. Générateur de gaz pour airbag selon l'une quelconque des revendications 1 à 3, dans lequel une partie de la portion cylindrique de l'élément de retenue (50) s'adapte à l'extérieur de la paroi périphérique cylindrique de l'organe cylindrique interne (4).

5. Générateur de gaz pour airbag selon l'une quelconque des revendications 1 à 4, dans lequel la totalité ou une partie de la portion cylindrique de l'élément de retenue (50) s'adapte à au moins l'une d'une surface périphérique interne du moyen de réfrigérant (22a, 22b) et d'une surface périphérique interne d'une paroi périphérique de logement.

6. Générateur de gaz pour airbag selon l'une quelconque des revendications 1 à 5, dans lequel une ouverture d'extrémité de la portion cylindrique est formée d'un seul tenant avec une portion de mise en prise qui met en prise une paroi périphérique cylindrique d'un organe cylindrique interne (4) selon une forme de type bride dirigée vers l'intérieur.

7. Générateur de gaz pour airbag selon la revendication 6, dans lequel le logement comprend une enveloppe de diffuseur (1) comportant un orifice d'évacuation de gaz (26) et une enveloppe de fermeture (2) formant un espace interne conjointement avec l'enveloppe de diffuseur (1), l'organe cylindrique interne (4) comprend une encoche en escalier (53) formée en encochant progressivement une surface périphérique externe de l'organe cylindrique interne (4) dans le côté enveloppe de fermeture, et une portion de mise en prise de l'élément de retenue (50) met en prise l'encoche.

8. Générateur de gaz pour airbag selon l'une quelconque des revendications 1 à 7, dans lequel, dans l'élément de retenue (50), la portion de cloison reçoit une pression de combustion du premier agent de génération de gaz (9a) logé dans la première chambre de combustion (5a), et de ce fait, la portion de mise en prise est poussée contre une portion à encoche en escalier (53) de l'organe cylindrique interne (4).

9. Générateur de gaz pour airbag selon l'une quelconque des revendications 1 à 8, dans lequel l'intérieur de l'organe cylindrique interne (4) est en outre divisé en une chambre de logement de moyen d'allumage (12) et une seconde chambre de combustion (5b) par une cloison (7), et l'élément de retenue (50) collecte des produits de combustion autres que la matière gazeuse générée par combustion du second agent de génération de gaz.

10. Générateur de gaz pour airbag selon l'une quelconque des revendications 1 à 9, dans lequel l'agent de génération de gaz (9a) logé dans la première chambre de combustion (5a) comprend un combustible et un agent d'oxydation, l'agent d'oxydation étant un nitrate de métal de base.

11. Générateur de gaz pour airbag selon la revendication 10, dans lequel le combustible se compose de dérivés de guanidine ou d'un mélange de ceux-ci.
